# EUROPEAN PATENT APPLICATION

(11) **EP 3 183 969 A1**
(43) Date of publication of application: **28.06.2017**
(21) Application number: 15202030.1
(22) Date of filing: 22.12.2015
(51) Int. Cl.: A01N 59/00, A01N 59/06, A01N 59/16, A01N 43/80, A01N 35/08, A01N 31/08, A01N 43/40, A01P 1/00, D21H 21/36

(54) **METAL OXIDES AND/OR HYDRATES THEREOF FOR STABILISING AN AQUEOUS PREPARATION AGAINST MICROBIAL GROWTH**

(71) Applicant: Omya International AG, 4665 Oftringen (CH)
(72) Inventor: URWYLER, Simon, 3012 Bern (CH); GLAUBITZ, Joachim, 5643 Sins (CH); ZUMSTEG, Anita, 8706 Meilen (CH)
(74) Representative: Boos, Melanie

(57) **Abstract**

The invention relates to a process for stabilising an aqueous preparation against microbial growth, the aqueous preparation stabilised against microbial growth as well as the use of a source of at least one metal oxide and/or its hydrated form for reducing the amount of an antimicrobial agent against at least one strain of bacteria and/or at least one strain of yeast and/or at least one strain of mould in an aqueous preparation, the use of a composition comprising at least one antimicrobial agent and a source of at least one metal oxide and/or its hydrated form as an antimicrobial composition in an aqueous preparation, the use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide, and mixtures thereof for increasing the pH of an aqueous preparation to a pH of above 8 and the use of an aqueous preparation stabilised against microbial growth in paper, plastics, polymer compositions, paint, coatings, concrete and/or agriculture applications.

## Description

The invention relates to a process for stabilising an aqueous preparation against microbial growth, the aqueous preparation stabilised against microbial growth as well as the use of a source of at least one metal oxide and/or its hydrated form for reducing the amount of an antimicrobial agent against at least one strain of bacteria and/or at least one strain of yeast and/or at least one strain of mould in an aqueous preparation, the use of a composition comprising at least one antimicrobial agent and a source of at least one metal oxide and/or its hydrated form as an antimicrobial composition in an aqueous preparation, the use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof for increasing the pH of an aqueous preparation to a pH of above 8 and the use of an aqueous preparation stabilised against microbial growth in paper, plastics, polymer compositions, paint, coatings, concrete and/or agriculture applications.

In practice, aqueous preparations and especially suspensions, dispersions or slurries of water-insoluble solids such as minerals, fillers or pigments are used extensively in the paper, paint, rubber, and plastics industries as coatings, fillers, extenders and pigments for papermaking as well as aqueous lacquers and paints. For example, suspensions or slurries of calcium carbonate, talc or kaolin are used in the paper industry in large amounts as filler and/or as a component in the preparation of coated paper. Furthermore, such aqueous preparations are also used as additives in the concrete and agriculture industries. Typical aqueous preparations of water-insoluble solids are characterized in that they comprise water, a water-insoluble solid compound and optionally further additives, such as dispersing agents, in the form of a suspension, a slurry or dispersion with a water-insoluble solid content of 0.1 to 99.0 wt.-% based on the total weight of the preparation. A typical aqueous preparation is a White Mineral Dispersion (WMD) having a solids content of 45.0 to 78.0 wt.-%. Water-soluble polymers and copolymers which may be used as e.g. dispersant and/or grinding aid in such preparation are, for example, described in US 5,278,248.

The aforementioned aqueous preparations are often subject to contamination by microorganisms such as fungi, yeasts, protozoa and/or aerobic and anaerobic bacteria resulting in changes in the preparation properties such as changes in viscosity and/or pH, discolorations or reductions in other quality parameters, which negatively affect their commercial value. Furthermore, such contamination by microorganisms is, depending on the species, a risk to humans, animals and/or crops. Therefore, the manufacturers of such aqueous preparations usually take measures for stabilising the suspensions, dispersions or slurries by using antimicrobial agents. However, also such antimicrobial agents may have risks for the environment and human or animal health in the quantities used. Furthermore, the use of antimicrobial agents in aqueous preparations is subject to continuously increasing limitations especially regarding the antimicrobial agent concentrations. Thus, in order to reduce the amount antimicrobial agents in aqueous preparations, chemicals without antimicrobial properties are often added which enhance the performances of the antimicrobial agents.

For ensuring an acceptable microbiological quality of aqueous preparations, preservatives or biocides are typically used over the entire life cycle of the preparation (production, storage, transport, use). In the art, several approaches for improving the microbiological quality of aqueous preparations have been proposed. For example, EP 1 139 741 describes aqueous suspensions or dispersions of minerals, fillers and/or pigments, containing a microbiocidal agent in the form of a solution and derivatives of phenol in partially neutralized form. US 5,496,398 relates to a process for the reduction of microorganisms in kaolin clay slurries by a combination of low temperature heat and reduced levels of a microbiocidal agent. US 2006/0111410 mentions a mixture comprising 1,2-benzisothiazolinone (BIT) and tetramethylol-acetylenediurea (TMAD) for protecting industrial materials and products against attack and destruction by microorganisms. Furthermore, it is suggested in the art to add formaldehyde-releasing substances to such aqueous preparations for improving the microbiological quality. For example, US 4,655,815 mentions an antimicrobial composition comprising a formaldehyde donor.
WO 2004/040979 A1 relates to synergic antimicrobial mixtures containing 1,2-benzisothiazolinone (BIT) and benzylhemiformal (BHF). The corresponding mixtures are used, for example, for slurries of pigments. EP 1 661 587 A1 relates to germicidal compositions including phthalaldehyde as an active ingredient. It is indicated in EP 1 661 587 A1 that halide ions, carbonate salts and bicarbonate salts may enhance the germicidal efficacy of phthalaldehyde against highly resistant *Bacillus sarbtilis* spores. US 2001/0009682 A1 relates to disinfectant concentrates having improved biocidal activity which may contain an aldehyde such as glutaraldehyde, a glycol and a lithium based buffer. It is described in US 2001/0009682 A1 that the buffer is required to control the pH of both the concentrate and its dilutions within the desired biocidal effective range. EP 2 199 348 A1 relates to a process for manufacturing aqueous mineral material suspensions or dried mineral materials using at least one lithium ion neutralised water-soluble organic polymer as well as the use of the lithium ion neutralised water-soluble organic polymer in the manufacturing process as a dispersing and/or grinding enhancer. EP 2 374 353 A1 refers to a process for preserving an aqueous preparation of mineral material like e.g. calcium carbonate preparations. EP 2 596 702 A1 refers to a process for stabilising an aqueous mineral preparation comprising a step of adding at least one aldehyde-containing and/or aldehyde-releasing and/or phenolic and/or isothiazoline biocide to said aqueous mineral preparation. US 4,871,754 refers to aqueous solutions which are protected from infestation by micro-organisms by use of a biocide which is an aqueous formulation of the lithium salt of 1,2-benzisothiazolin-3-one. EP 2 272 348 A1 refers to a biocidal agent (I) comprising 98 % of one or more halogen-free isothiazolinones, and 1-500 ppm by weight (w/w) of copper(II)-ions. It is further described that BIT may be provided in the form of its alkali metal salt. EP 1 843 794 A1 and US 2009/0120327 A1 refer to a process to control microbial contamination by the use of OH- ions at concentrations greater than 1x10⁻² mole/l. The invention further illustrates the ineffectiveness of microbial control at lower OH- concentration. Furthermore, the applicant is aware of EP 2 108 260 A2 referring to a process for bacterial stabilising aqueous preparations like e.g. calcium carbonate slurries and a composition which can be used for the biocidal treatment of such aqueous preparations. EP 2 108 260 A2 does not refer to a stabilisation using metal oxide such as magnesium oxide.
US 2004/0168614 A1 relates to a paint and/or a coating composition including anticorrosive pigment comprises a metal salt comprising a metal cation and an anion and a metal oxide or a metal hydroxide where the molar ratio of the total metal to the anion is in the range of 1:4 to 1:120. US 2005/0202102 A1 refers to a biocide composition comprising water-immiscible acidic oil, a magnesium salt and an amine as well as a method for the production of the biocide, comprising the steps of solubilizing the amine in the oil and then sufficiently admixing the magnesium salt, until an homogeneous suspension is obtained. WO 02/052941 A1 relates to a process for producing a biocide composition, comprising the steps of mixing a metal salt solution with at least one metal oxide in a molar ratio of between 4:1 and 1:2 oxide to salt and drying the resultant mixture thereby forming a cement powder. WO 2004/032624 A2 refers to area decontamination products and methods of use thereof which include reactive nanoparticles (e.g., metal oxides, hydroxides and mixtures thereof) with one or more biocides and a liquid carrier for the nanoparticles and biocide(s). The products may be formulated for area decontamination as sprays, fogs, aerosols, pastes, gels, wipes or foams, and the presence of reactive nanoparticles enhances the neutralization of undesirable chemical or biological compounds or agents. The nanoparticles may be from the group consisting of the alkali metal, alkaline earth metal, transition metal, actinide and lanthanide oxides and hydroxides and mixtures thereof. Nicole Jones et al., "Antibacterial activity of ZnO nanoparticle suspensions on a broad spectrum of microorganisms", FEMS Microbial Lett 279, 2008, 71-76 discloses that ZnO nanoparticles have a potential application as bacteriostatic agent in visible light and may have future application in the development of derivative agents to control the spread and infection of a variety of bacterial strains. Yao Kanga, "Controlled release of isothiazoline biocides from industrial minerals", thesis, School of Chemical Engineering, University of Birmingham, September 2010 discloses that various minerals such as kaolin, montmorillonite, calcium silicate, diatomaceous earth, amorphous silica and halloysite can be used to adsorb isothiazoline biocides for controlled-release and antimicrobial purposes.

However, the use of antimicrobial agents in aqueous preparations is subject to continuously increasing limitations especially regarding their concentrations. However, at reduced antimicrobial agent concentration the efficacy of the respective antimicrobial agent against bacteria, yeasts and/or moulds is usually not satisfactory anymore in comparison to the antimicrobial efficacy observed at a higher concentration of the same antimicrobial agent and, thus, the obtained antimicrobial action at reduced antimicrobial agent concentration is typically insufficient for stabilising an aqueous preparation against antimicrobial growth.

Therefore, there is still a need in the art for adequate processes for stabilising aqueous preparations such as solutions, suspensions, dispersions and slurries against antimicrobial growth.

Thus, it is an objective of the present invention to provide a process for stabilising an aqueous preparation against microbial growth. In particular, it is thus an objective of the present invention to provide a process for stabilising an aqueous preparation against microbial growth by reducing the effective amount of the antimicrobial agents, which are in many cases toxic reagents, and used without using further toxic additives. It is still a further object of the present invention to provide a process which provides sufficient antimicrobial activity in aqueous preparations at reduced antimicrobial agent concentration, i.e. at an antimicrobial agent concentration which is below the minimum inhibitory concentration (MIC) of the respective antimicrobial agent in the absence of a compound reducing the minimum inhibitory concentration. A still further object of the present invention is to provide a process which stabilises or increases the pH of the aqueous preparation and thus stabilises the aqueous preparation against microbial growth.

These and other objectives of the present invention can be solved by a process, an aqueous preparation and the uses as described in the present invention and defined in the claims.

According to one aspect of the present application a process for stabilising an aqueous preparation against microbial growth is provided. The process comprising the steps of:
a) providing an aqueous preparation,
b) providing at least one antimicrobial agent, optionally comprising at least one strain of bacteria and/or at least one strain of yeast and/or at least one strain of mould,
c) providing a source of at least one metal oxide and/or its hydrated form,
d) contacting the aqueous preparation of step a) with the at least one antimicrobial agent of step b),
e) contacting the aqueous preparation of step a) before and/or during and/or after step d) with the source of at least one metal oxide and/or its hydrated form such that the total amount of the at least one metal oxide and/or its hydrated form in the aqueous preparation is at least 100 ppm, calculated relative to the weight of water in the preparation.

According to another aspect of the present invention, an aqueous preparation stabilised against microbial growth obtainable by a process, as defined herein, is provided.

According to a further aspect of the present invention, an aqueous preparation stabilised against microbial growth is provided. The aqueous preparation comprising
a) at least one antimicrobial agent in an amount such that the total amount of the at least one antimicrobial agent in the aqueous preparation is from 0.5 ppm to 6 000 ppm, calculated relative to the weight of water in the aqueous preparation, and
b) a source of at least one metal oxide and/or its hydrated form such that the total amount of the at least one metal oxide and/or its hydrated form in the aqueous preparation is at least 100 ppm, calculated relative to the weight of water in the aqueous preparation.

According to a still further aspect of the present invention, the use of a source of at least one metal oxide and/or its hydrated form, preferably the source of at least one metal oxide and/or its hydrated form is selected from the group comprising magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, more preferably magnesium oxide and/or magnesium hydroxide, for reducing the amount of an antimicrobial agent against at least one strain of bacteria and/or at least one strain of yeast and/or at least one strain of mould in an aqueous preparation, as defined herein, is provided, wherein the amount of the antimicrobial agent in the aqueous preparation is at least 10 %, preferably at least 25 %, more preferably at least 50 % and most preferably at least 75 %, below the minimum inhibitory concentration (MIC) of the at least one antimicrobial agent, the MIC being determined in absence of the metal oxide and/or its hydrated form for the at least one strain of bacteria and/or at least one strain of yeast and/or at least one strain of mould.

According to an even further aspect of the present invention, the use of a composition as an antimicrobial composition in an aqueous preparation optionally comprising at least one strain of bacteria and/or at least one strain of yeast and/or at least one strain of mould is provided. The composition comprising
a) at least one antimicrobial agent in an amount such that the total amount of the at least one antimicrobial agent in the aqueous preparation is from 0.5 ppm to 6 000 ppm, calculated relative to the weight of water in the aqueous preparation, and
b) a source of at least one metal oxide and/or its hydrated form such that the total amount of the at least one metal oxide and/or its hydrated form in the aqueous preparation is at least 100 ppm, calculated relative to the weight of water in the aqueous preparation.

According to another aspect of the present invention, the use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide, for increasing the pH of an aqueous preparation, as defined herein, to a pH of above 8, preferably of above 9, e.g. above 9.2, more preferably above 9.4, even more preferably above 9.6, still more preferably above 9.8, and most preferably of above 10, e.g. from 10 to 10.5, is provided.

According to a further aspect of the present invention, the use of an aqueous preparation stabilised against microbial growth, as defined herein, in paper, plastics, polymer compositions, paint, coatings, concrete and/or agriculture applications is provided.

According to the present invention, the content of the metal oxide and/or its hydrated form in the aqueous preparation can be evaluated by filtering off the solids in the suspension by membrane filtration (pore size of 0.2 micrometres (µm)) and measuring the content of metal oxide and/or its hydrated form in the solid fraction by X-ray diffraction (XRD) analysis known to the skilled person.

According to the present invention, the content of the at least one antimicrobial agent in the aqueous phase can be evaluated by HPLC (high pressure liquid chromatography). If necessary, the corresponding antimicrobial agent may be converted into a derivative before evaluating with HPLC.

The term "minimum inhibitory concentration (MIC)" refers to the lowest concentration of the respective antimicrobial agent required for preventing or reducing microbial growth, defined in respect to colony forming units (cfu), in the aqueous preparation, i.e. when the microbial concentration dropped below 100 cfu/plate measured in accordance with the method for determining the MIC as described in the example section.

According to the present invention, the wording "process for stabilising an aqueous preparation against microbial growth" means that an antimicrobial activity of an antimicrobial agent is induced or prolonged or increased or effected by the source of at least one metal oxide and/or its hydrated form such that a microbial growth is prevented or reduced in the presence of said metal oxide and/or its hydrated form.

In the meaning of the present invention, antimicrobial agents which are "effective" against at least one strain of bacteria and/or at least one strain of yeast and/or at least one strain of mould refer to antimicrobial agents having the ability to stabilise the aqueous preparation, i.e. to prevent or reduce microbial growth of at least one strain of bacteria and/or at least one strain of yeast and/or at least one strain of mould, when dosed in usual amounts (e.g. as proposed by the supplier of the antimicrobial agent).

According to the present invention, the wording "prevents microbial growth" means that no significant growth of at least one strain of bacteria and/or at least one strain of yeast and/or at least one strain of mould is observed in the aqueous preparation when the antimicrobial agent is present. This preferably does not lead to an increase of the cfu value in the treated aqueous preparation compared to the preparation immediately before treatment, more preferably to a decrease of the value to less than 100 cfu/plate and even more preferably to a decrease of the value to less than 80 cfu/plate using the bacterial count method described in the example section herein.

According to the present invention, the wording "reduce microbial growth" means that growth of at least one strain of bacteria and/or at least one strain of yeast and/or at least one strain of mould is slower in the aqueous preparation when the antimicrobial agent is present. This preferably leads to a lower cfu value in the treated aqueous preparation compared to the preparation without antimicrobial agent before treatment, more preferably to a value of less than 100 cfu/plate and even more preferably to a value of less than 80 cfu/plate using the bacterial count method described in the example section herein.

According to the present invention, a "significant growth or accumulation" of the at least one strain of bacteria and/or at least one strain of yeast and/or at least one strain of mould is observed if the difference after 24 h, i.e. the growth of the of the at least one strain of bacteria and/or at least one strain of yeast and/or at least one strain of mould, is greater than the error associated with the measurement technique and measured by plate-out on a tryptic soy agar (TSA), where the plates are incubated at 30°C and evaluated after 48 hours, according to the bacterial count method described in the Example section herein.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that, e.g. an embodiment must be obtained by e.g. the sequence of steps following the term "obtained" even though such a limited understanding is always included by the terms "obtained" or "defined" as a preferred embodiment.

When in the following reference is made to preferred embodiments or technical details of the inventive process for stabilising an aqueous preparation against microbial growth, it is to be understood that these preferred embodiments or technical details also refer to the inventive aqueous preparation and the inventive uses as defined herein (as far as applicable).

According to one embodiment of the present invention, the aqueous preparation of step a) comprises (i) at least one inorganic particulate material, preferably the at least one inorganic particulate material is selected from the group comprising natural ground calcium carbonate, natural and/or synthetic precipitated calcium carbonate, surface-modified calcium carbonate, dolomite, kaolin, talcum, aluminium hydroxide, aluminium silicate, titanium dioxide, barium sulphate, hydroxyapatite and mixtures thereof, and most preferably the at least one inorganic particulate material comprises natural ground calcium carbonate and/or synthetic precipitated calcium carbonate, and/or (ii) at least one organic material, preferably the at least one organic material is selected from the group comprising carbohydrates such as starch, sugar, cellulose and cellulose based pulp, glycerol, hydrocarbons and mixtures thereof.

According to another embodiment of the present invention, the aqueous preparation of (i) step a) and/or of step d) has a pH value of from 2 to 12, preferably from 6 to 11.5 and more preferably from 7 to 10.5, and/or (ii) step e) has a pH value of above 8, and preferably of above 9, and/or (iii) step a) and/or of step d) and/or step e) has a solids content of up to 85.0 wt.-%, preferably from 10.0 to 82.0 wt.-%, and more preferably from 20.0 to 80.0 wt.-%, based on the total weight of the aqueous preparation.

According to yet another embodiment of the present invention, the at least one strain of bacteria is selected from the group consisting of gram-negative bacteria, gram-positive bacteria and mixtures thereof.

According to one embodiment of the present invention, (i) the at least one strain of bacteria is selected from the group comprising *Methylobacterium sp., Salmonella sp., Escherichia sp.* such as *Escherichia coli, Shigella sp., Enterobacter sp., Pseardomonas sp.* such as *Pseudomonas mendocina, Pseardomonas stutzeri Pseardomonas aeruginosa*, and/or *Pseudomonas putida, Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp.* such as *Ochrobactrum tritici, Kocuria sp.* such as *Kocuria rhizophila*, *Rhizobium sp.* such as *Rhizobium radiobacter, Sphingobacterium sp., Aeromonas sp., Chromobacterium sp., Vibrio sp., Hyphomicrobium sp., Leptothrix sp., Micrococcars sp., Staphylococcus sp.* such as *Staphylococcus aureus, Agromyces sp., Acidovorax sp., Commomonas sp.* such as *Comomonas aquatic, Brevundimonas sp., Spingobium sp.* such as *Spingobium yanoikuyae, Thauera sp.* such as *Thauera mechernichensis, Caldimonas sp., Hdrogenophaga sp., Teipidomonas sp.,* and mixtures thereof, and/or (ii) the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae and mixtures thereof, Yarrowia sp.* such as *Yarrowia lipolytica, Cryptococcus sp.* such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof, and/or (iii) the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

According to another embodiment, the at least one antimicrobial agent of step b) is effective against the at least one strain of bacteria and/or at least one strain of yeast and/or at least one strain of mould when present in the aqueous preparation or the at least one antimicrobial agent of step b) is effective against the at least one strain of bacteria and/or at least one strain of yeast and/or at least one strain of mould when present in the aqueous preparation in the presence of the source of at least one metal oxide and/or its hydrated form.

According to yet another embodiment of the present invention, the at least one antimicrobial agent of step b) is selected from the group comprising phenols, halogenated phenols, halogen-containing compounds, halogen-releasing compounds, isothiazolinones, aldehyde-containing compounds, aldehyde-releasing compounds, guanidines, sulphones, thiocyanates, pyrithiones, antibiotics such as β-lactam antibiotics, quaternary ammonium salts, peroxides, perchlorates, amides, amines, heavy metals, biocidal enzymes, biocidal polypeptides, azoles, carbamates, glyphosates, sulphonamides and mixtures thereof.

According to one embodiment of the present invention, the source of at least one metal oxide and/or its hydrated form comprises an oxide and/or a hydrated form of an element of group 2 of the periodic table.

According to another embodiment of the present invention, the source of at least one metal oxide and/or its hydrated form is selected from the group comprising magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide.

According to yet another embodiment of the present invention, step e) is carried out in that the source of at least one metal oxide and/or its hydrated form is added to the aqueous preparation in an amount such that the total amount of the at least one metal oxide and/or its hydrated form in the aqueous preparation is from 100 to 5 000 ppm, calculated relative to the weight of water in the preparation.

According to one embodiment of the present invention, step e) is carried out before step d).

According to another embodiment of the present invention, step d) and/or step e) is/are repeated one or more times.

According to yet another embodiment of the present invention, step d) is carried out in that the at least one antimicrobial agent is added to the aqueous preparation (i) in an amount being at least 10 %, preferably at least 25 %, more preferably at least 50 % and most preferably at least 75 %, below the minimum inhibitory concentration (MIC) of the at least one antimicrobial agent determined in the absence of the metal oxide and/or its hydrated form for the at least one strain of bacteria and/or at least one strain of yeast and/or at least one strain of mould, and/or (ii) in an amount such that the total amount of the at least one antimicrobial agent in the aqueous preparation is from 0.5 ppm to 6 000 ppm, calculated relative to the weight of water in the aqueous preparation.

As set out above, the inventive process for stabilising an aqueous preparation against microbial growth comprises the steps a), b), c), d) and e). In the following, it is referred to further details of the present invention and especially the foregoing steps of the inventive process for stabilising an aqueous preparation against microbial growth. Those skilled in the art will understand that many embodiments described herein can be combined or applied together.

### Characterisation of step a): provision of an aqueous preparation

According to step a) of the process of the present invention, an aqueous preparation is provided.

It is appreciated that the aqueous preparation provided in step a) of the instant process can be any aqueous preparation that requires stabilisation against microbial growth, i.e. reduction or prevention of the growth and/or accumulation of at least one strain of bacteria and/or at least one strain of yeast and/or at least one strain of mould.

Thus, the aqueous preparation provided in step a) optionally comprises at least one strain of bacteria and/or at least one strain of yeast and/or at least one strain of mould.

Preferably, the aqueous preparation provided in step a) comprises at least one strain of bacteria and/or at least one strain of yeast and/or at least one strain of mould. In this embodiment, the aqueous preparation preferably requires reduction of the growth and/or accumulation of at least one strain of bacteria and/or at least one strain of yeast and/or at least one strain of mould.

Alternatively, the aqueous preparation provided in step a) is free of the at least one strain of bacteria and/or at least one strain of yeast and/or at least one strain of mould. In this embodiment, the aqueous preparation preferably requires prevention of the growth and/or accumulation of at least one strain of bacteria and/or at least one strain of yeast and/or at least one strain of mould.

The term "aqueous" preparation refers to a system, wherein the liquid phase of the preparation comprises, preferably consists of, water. However, said term does not exclude that the aqueous preparation comprises an organic solvent selected from the group comprising alcohols such as methanol, ethanol, isopropanol, carbonyl-group containing solvents such as ketones, e.g. acetone or aldehydes, esters such as isopropyl acetate, carboxylic acids such as formic acid, sulphoxides such as dimethyl sulphoxide and mixtures thereof. If the aqueous preparation comprises an organic solvent, the aqueous preparation comprises the organic solvent in an amount up to 40.0 wt.-% preferably from 1.0 to 30.0 wt.-% and most preferably from 1.0 to 25.0 wt.-%, based on the total weight of the liquid phase of the aqueous preparation. For example, the liquid phase of the aqueous preparation consists of water. If the liquid phase of the aqueous preparation consists of water, the water to be used can be any water available such as tap water and/or deionised water.

The aqueous preparation of step a) can be an aqueous solution or an aqueous suspension. In one embodiment of the present invention, the aqueous preparation of step a) is an aqueous suspension.

The term "aqueous solution" in the meaning of the present invention refers to systems in which no discrete solid particles are observed in the solvent, i.e. in case a further material, such as at least one organic material, are present, a solution with water is formed, wherein the possible particles of the further material are dissolved in the solvent.

The term "aqueous suspension" in the meaning of the present invention refers to a system comprising solvent and at least one inorganic particulate material and/or at least one organic material, wherein at least a part of the particles of the at least one inorganic particulate material and/or the at least one organic material are present as insoluble solids in the solvent.

The aqueous preparation provided in step a) preferably comprises at least one inorganic particulate material.

The term "at least one" inorganic particulate material in the meaning of the present invention means that the inorganic particulate material comprises, preferably consists of, one or more inorganic particulate materials.

In one embodiment of the present invention, the at least one inorganic particulate material comprises, preferably consists of, one inorganic particulate material. Alternatively, the at least one inorganic particulate material comprises, preferably consists of, two or more inorganic particulate materials. For example, the at least one inorganic particulate material comprises, preferably consists of, two or three inorganic particulate material. Preferably, the at least one inorganic particulate material comprises, preferably consists of, one inorganic particulate material.

For example, the at least one inorganic particulate material is selected from the group comprising natural ground calcium carbonate, natural and/or synthetic precipitated calcium carbonate, surface-modified calcium carbonate, dolomite, kaolin, talcum, aluminium hydroxide, aluminium silicate, titanium dioxide, barium sulphate, hydroxyapatite and mixtures thereof.

In one embodiment of the present invention, the at least one inorganic particulate material comprises natural ground calcium carbonate and/or synthetic precipitated calcium carbonate and/or surface-modified calcium carbonate. Preferably, the at least one inorganic particulate material comprises natural ground calcium carbonate and/or synthetic precipitated calcium carbonate.

"Ground calcium carbonate" (GCC) in the meaning of the present invention is a calcium carbonate obtained from natural sources, such as limestone, marble or chalk, and processed through a treatment such as grinding, screening and/or fractionizing by wet and/or dry, for example by a cyclone or classifier.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water.

A "surface-modified calcium carbonate" may feature surface-reacted GCC or PCC. A surface-reacted calcium carbonate may be prepared by providing a GCC or PCC in form of an aqueous suspension, and adding an acid to said suspension. Suitable acids are, for example, sulphuric acid, hydrochloric acid, phosphoric acid, citric acid, oxalic acid, or a mixture thereof. In a next step, the calcium carbonate is treated with gaseous carbon dioxide. If a strong acid such as sulphuric acid or hydrochloric acid is used for the acid treatment step, the carbon dioxide will form automatically *in situ.*

Alternatively or additionally, the carbon dioxide can be supplied from an external source. Surface-reacted calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

The natural ground calcium carbonate and/or synthetic precipitated calcium carbonate and/or surface-modified calcium carbonate may additionally be surface treated or may comprise a dispersing agent well known to the skilled person. For example, the dispersing agent may be an acrylate-based dispersing agent.

If the aqueous preparation provided in step a) comprises at least one inorganic particulate material, the at least one inorganic particulate material may have a particle size distribution as conventionally employed for the material(s) involved in the type of product to be produced. In general, 90 % of the particles will have an esd (equivalent spherical diameter as measured by the well-known technique of sedimentation using Sedigraph 5100 series, Micromeritics) of less than 5 µm. Coarse inorganic particulate materials may have a particle esd generally (i.e., at least 90 wt.-%) in the range of 1 to 5 µm. Fine inorganic particulate materials may have a particle esd generally less than 2 µm, e.g. 50.0 to 99.0 wt.-% less than 2 µm and preferably 60.0 to 90.0 wt.-% less than 2 µm. It is preferred that the at least one inorganic particulate material in the aqueous preparation has a weight median particle size *d*₅₀ value of from 0.1 to 5 µm, preferably from 0.2 to 2 µm and most preferably from 0.35 to 1 µm, for example 0.7 µm as measured using a Sedigraph™ 5100 of Micromeritics Instrument Corporation.

For keeping such inorganic particulate materials dispersed in an aqueous preparation and thus ensuring that the viscosity of the preparation remains substantially the same over time, additives such as dispersing agents can be used. A suitable dispersing agent according to the present invention is preferably a homo or copolymer made of monomers and/or co-monomers selected from the group consisting of acrylic acid, methacrylic acid, itaconic acid, crotonic acid, fumaric acid, maleic anhydride acid, isocrotonic acid, aconitic acid (cis or trans), mesaconic acid, sinapinic acid, undecylenic acid, angelic acid, canellic acid, hydroxyacrylic acid, acrolein, acrylamide, acrylonitrile, dimethylaminoethyl methacrylate, vinylpyrrolidone, styrene, the esters of acrylic and methacrylic acids and mixtures thereof, wherein salts of poly(acrylic acid) and/or poly (methacrylic acid) are preferred as dispersing agent.

Additionally or alternatively, the aqueous preparation of step a) comprises at least one organic particulate material. For example, the at least one organic material is selected from the group comprising carbohydrates such as CMC or starch, sugar, cellulose and cellulose based pulp, glycerol, hydrocarbons and mixtures thereof.

In one embodiment of the present invention, the aqueous preparation of step a) comprises at least one inorganic particulate material, preferably being selected from the group comprising natural ground calcium carbonate, natural and/or synthetic precipitated calcium carbonate, dolomite, kaolin, talcum, aluminium hydroxide, aluminium silicate, titanium dioxide, barium sulphate and mixtures thereof, and most preferably comprising natural ground calcium carbonate and/or synthetic precipitated calcium carbonate.

Thus, the aqueous preparation of step a) is preferably an aqueous suspension (or slurry).

It is appreciated that the solids content of the aqueous preparation provided in step a) can be up to 85.0 wt.-%. For example, the solids content of the aqueous preparation is from 10.0 to 82.0 wt.-%, and more preferably from 20.0 to 80.0 wt.-%, based on the total weight of the aqueous preparation.

The total solids content in the meaning of the present application corresponds to the residual weight of the aqueous preparation after drying for 3 h at 105°C as measured in a sample of at least 3 to 5 g.

The pH of the aqueous preparation provided in step a) can vary in a broad range and is preferably in a pH range typically observed for such aqueous preparations. It is thus appreciated that the aqueous preparation of step a) preferably has a pH value of from 2 to 12. For example, the aqueous preparation of step a) has a pH value of from 6 to 11.5 and more preferably from 7 to 10.5.

Typically, the aqueous preparations provided in step a) has a viscosity being preferably in the range from 50 to 2 000 mPa·s and preferably from 80 to 800 mPa·s, as measured with a Brookfield DV-II Viscometer at a speed of 100 rpm and equipped with a LV-3 spindle.

The aqueous preparations according to the invention can be produced by methods known in the art, by for example, dispersing, suspending or slurring water-insoluble solids, preferably inorganic particulate materials with, if appropriate, addition of a dispersing agent and, if appropriate, further additives in water.

### Characterisation of step b): providing at least one antimicrobial agent

According to step b) of the process of the present invention, at least one antimicrobial agent is provided.

The term "at least one" antimicrobial agent in the meaning of the present invention means that the antimicrobial agent comprises, preferably consists of, one or more antimicrobial agent(s).

In one embodiment of the present invention, the at least one antimicrobial agent comprises, preferably consists of, one antimicrobial agent. Alternatively, the at least one antimicrobial agent comprises, preferably consists of, two or more antimicrobial agents. For example, the at least one antimicrobial agent comprises, preferably consists of, two or three antimicrobial agents. Preferably, the at least one antimicrobial agent comprises, preferably consists of, two or more antimicrobial agents.

The antimicrobial agent suitable for the present invention may be any antimicrobial agent being effective against microbial growth, i.e. against the growth of at least one strain of bacteria and/or at least one strain of yeast and/or at least one strain of mould, in the aqueous preparation in the absence of the source of at least one metal oxide and/or its hydrated form. Thus, the at least one antimicrobial agent of step b) is preferably effective against the at least one strain of bacteria and/or at least one strain of yeast and/or at least one strain of mould when present in the aqueous preparation.

Alternatively, the antimicrobial agent may be any antimicrobial agent being effective against the growth of at least one strain of bacteria and/or at least one strain of yeast and/or at least one strain of mould, in the aqueous preparation only in the presence of the source of at least one metal oxide and/or its hydrated form. That is to say, the antimicrobial agent does not show an antimicrobial effect in the absence of the source of at least one metal oxide and/or its hydrated form but only in its presence.

Thus, the at least one antimicrobial agent of step b) is preferably effective against the at least one strain of bacteria and/or at least one strain of yeast and/or at least one strain of mould when present in the aqueous preparation in the presence of the source of at least one metal oxide and/or its hydrated form.

Preferred antimicrobial agents according to the present invention include antimicrobial agents being selected from the group comprising phenols, halogenated phenols, halogen-containing compounds, halogen-releasing compounds, isothiazolinones, aldehyde-containing compounds, aldehyde-releasing compounds, guanidines, sulphones, thiocyanates, pyrithiones, antibiotics such as β-lactam antibiotics, quaternary ammonium salts, peroxides, perchlorates, amides, amines, heavy metals, biocidal enzymes, biocidal polypeptides, azoles, carbamates, glyphosates, sulphonamides and mixtures thereof.

The phenol antimicrobial agent of the present invention is preferably 2-phenylphenol (OPP) (CAS NO 90-43-7) and/or 2-phenylphenol (OPP) in the form of the alkali metal salt such as the sodium salt (CAS NO 132-27-4) or potassium salt (CAS NO 13707-65-8).

For example, the dosage recommendation by commercial suppliers of such phenol antimicrobial agents in the absence of the source of at least one metal oxide and/or its hydrated form is typically from 1 500 to 6 000 ppm (w/w) active antimicrobial agent per aqueous preparation having a 75 wt.-% solids content of calcium carbonate.

The halogenated phenol antimicrobial agent of the present invention is preferably 4-chloro-3-methylphenol (CAS NO 59-50-7) and/or 4-chloro-2-methylphenol (CAS NO 1570-64-5).

For example, the dosage recommendation by commercial suppliers of such a halogenated phenol antimicrobial agent in the absence of the source of at least one metal oxide and/or its hydrated form is typically from 3 900 to 25 000 ppm (w/w) active antimicrobial agent per aqueous preparation having a 75 wt.-% solids content of calcium carbonate.

The antimicrobial agent being a halogen-containing or halogen-releasing compound is preferably selected from bronopol (CAS NO 52-51-7), bronidox (CAS NO 30007-47-7), 2,2-dibrom-3-nitrilpropionamid (DBNPA) (CAS NO 10222-01-2), 1,2-dibromo-2,4-dicyanobutane (CAS NO 35691-65-7), monochloroamine (CAS NO 10599-90-3), ammonium bromide (CAS NO 12124-97-9), calcium hypochlorite (CAS NO 7778-54-3), iodine (CAS NO 7553-56-2), tri-iodide (CAS NO 14900-04-0), potassium iodate (CAS NO 7758-05-6) and mixtures thereof.

In accordance with the present invention, a "halogen-containing antimicrobial agent" refers to an antimicrobial agent which has one or more halogen-groups. In accordance with the present invention, a "halogen-releasing antimicrobial agent" refers to a compound which is able to release or transfer a halogen group.

For example, the dosage recommendation by commercial suppliers of such a halogen-containing or halogen-releasing compound (e.g. bronopol) in the absence of the source of at least one metal oxide and/or its hydrated form is typically from 300 to 1 500 ppm (w/w) active antimicrobial agent per aqueous preparation having a 75 wt.-% solids content of calcium carbonate.

The isothiazolinone antimicrobial agent is preferably selected from the group comprising isothiazolinone (IT) (CAS NO 1003-07-2), benzisothiazolinone (BIT) (CAS NO 2634-33-5), 5-chloro-2-methyl-2H-isothiazolin-3-one (CMIT) (CAS NO 26172-55-4), 2-methyl-2H-isothiazolin-3-one (MIT) (CAS NO 2682-20-4), octylisothiazolinone (OIT) (CAS NO 26530-20-1), dichlorooctylisothiazolinone (DOIT) (CAS NO 64359-81-5) and mixtures thereof. For example, the isothiazolinone antimicrobial agent CMIT/MIT (CAS NO 55965-84-9) is a mixture of 5-chloro-2-methyl-2H-isothiazolin-3-one (CMIT) and 2-methyl-2H-isothiazolin-3-one (MIT) at a weight ratio of 3:1.

For example, the dosage recommendation by commercial suppliers of such an isothiazolinone antimicrobial agent in the absence of the source of at least one metal oxide and/or its hydrated form is typically from 25 to 1 500 ppm (w/w) active antimicrobial agent per aqueous preparation having a 75 wt.-% solids content of calcium carbonate. For example, the dosage recommendation by commercial suppliers of benzisothiazolinone (BIT) in the absence of the source of at least one metal oxide and/or its hydrated form is typically from 240 to 1 500 ppm (w/w) active antimicrobial agent per aqueous preparation having a 75 wt.-% solids content of calcium carbonate. For example, the dosage recommendation by commercial suppliers of 2-methyl-2H-isothiazolin-3-one (MIT) in the absence of the source of at least one metal oxide and/or its hydrated form is typically from 75 to 450 ppm (w/w) active antimicrobial agent per aqueous preparation having a 75 wt.-% solids content of calcium carbonate. If a mixture of 5-chloro-2-methyl-2H-isothiazolin-3-one (CMIT) and 2-methyl-2H-isothiazolin-3-one (MIT) (weight ratio of 3:1) is used as antimicrobial agent, the dosage recommendation by commercial suppliers of said mixture in the absence of the source of at least one metal oxide and/or its hydrated form is typically from 27 to 99 ppm (w/w) active antimicrobial agent per aqueous preparation having a 75 wt.-% solids content of calcium carbonate.

The aldehyde-containing compound is preferably selected from the group comprising formaldehyde (CAS NO 50-00-0), acetaldehyde, glyoxal, glutaraldehyde (CAS NO 111-30-8), 2-propenal, phthalic dialdehyde and mixtures thereof, and preferably is formaldehyde, glutaraldehyde or mixtures thereof.

In accordance with the present invention, an "aldehyde-containing antimicrobial agent" refers to an antimicrobial agent which has one or more aldehyde-group.

For example, the dosage recommendation by commercial suppliers of such an aldehyde-containing compound in the absence of the source of at least one metal oxide and/or its hydrated form is typically from 300 to 3 000 ppm (w/w) active antimicrobial agent per aqueous preparation having a 75 wt.-% solids content of calcium carbonate. For example, the dosage recommendation by commercial suppliers of Glutaraldehyde in the absence of the source of at least one metal oxide and/or its hydrated form is typically from 300 to 3 000 ppm (w/w) active antimicrobial agent per aqueous preparation having a 75 wt.-% solids content of calcium carbonate.

The aldehyde-releasing antimicrobial agent is preferably selected from the group comprising formaldehyde-releasing antimicrobial agents, acetaldehyde-releasing antimicrobial agents, succinaldehyde-releasing antimicrobial agents, 2-propenal-releasing antimicrobial agents and mixtures thereof, preferably from formaldehyde-releasing antimicrobial agents. The formaldehyde-releasing antimicrobial agent is preferably selected from the group comprising benzyl alcoholmono(poly)-hemiformal (CAS NO 14548-60-8), tetramethylol-acetylenediurea (CAS NO 5395-50-6), thiadiazinethione-tetrahydrodimethyl (DAZOMET) (CAS NO 533-74-4), (ethylenedioxy)dimethanol (EDDM) (CAS NO 3586-55-8), 2-chloro-N-(hydroxymethyl)acetamide (CAS NO 2832-19-1), dimethyloxazolidine (DMO) (CAS NO 51200-87-4), hexamethylenetetramine (CAS NO 100-97-0), bis[tetrakis(hydroxymethyl)phosphonium] sulphate (THPS) (CAS NO 55566-30-8), 1-(cis-3-chloroallyl)-3,5,7-triaza-1-azoniaadamantane chloride (CAS NO 51229-78-8), hexahydro-1,3,5-tris(hydroxyethyl)-s-triazine (CAS NO 4719-04-4) and mixtures thereof.

In accordance with the present invention, an "aldehyde-releasing antimicrobial agent" refers to a compound which is able to release mono- di-, and/or tri-aldehyde.

For example, the dosage recommendation by commercial suppliers of such an aldehyde-releasing compound in the absence of the source of at least one metal oxide and/or its hydrated form is typically from 375 to 750 ppm (w/w) active antimicrobial agent, e.g. for DAZOMET per aqueous preparation having a 75 wt.-% solids content of calcium carbonate.

The guanidine antimicrobial agent is preferably selected from guanidinedodecyl monochloride (CAS NO 13590-97-1) and/or polyethoxyethoxyethylguanidinium hexachloride (CAS NO 374572-91-5). The sulphone antimicrobial agent is preferably hexachlorodimethyl sulfone (CAS NO 3064-70-8) and/or 4,4'-Diaminodiphenylsulfone (CAS NO 80-08-0). The thiocyanate antimicrobial agent is preferably methylene bis(thiocyanate) (CAS NO 6317-18-6) and/or (Benzothiazol-2-ylthio)methylthiocyanate (CAS NO 21564-17-0). The antimicrobial agent being an antibiotic is preferably selected from β-lactam antibiotics such as penicillin G (CAS NO 69-57-8) and/or ampicillin (CAS NO 69-53-4) and/or biapenem (CAS NO 120410-24-4) and/or cefixime (CAS NO 79350-37-1). The amide antimicrobial agent is preferably 2,2-dibromo-3-nitrilopropionamide (DBNPA) (CAS NO 10222-01-2). The azole antimicrobial agent can be preferably selected from climbazole (CAS NO 38083-17-9), miconazole (CAS NO 22916-47-8), clotrimazole (CAS NO 23593-75-1), and mixtures thereof including the antimicrobial agents in the form of a salt such as miconazole nitrate (CAS NO 22832-87-7). The carbamate antimicrobial agent can be preferably selected from iodopropynyl butylcarbamate (CAS NO 55406-53-6), aldicarb (CAS NO 116-06-3), carbofuran (CAS NO 1563-66-2) and mixtures thereof. The glyphosate antimicrobial agent is preferably selected from N-(phosphonomethyl)glycine (CAS NO 1071-83-6) and/or N-(phosphonomethyl)glycine in the form of the salt such as the ammonium salt or isopropylammonium salt (CAS NO 40465-66-5 and CAS NO 38641-94-0).

The pyrithione antimicrobial agent is preferably sodium pyrithione (CAS NO 3811-73-2) and/or zinc pyrithione (CAS NO 13463-41-7).

For example, the dosage recommendation by commercial suppliers of such a pyrithione antimicrobial agent in the absence of the source of at least one metal oxide and/or its hydrated form is typically from 600 to 1 500 ppm (w/w) active antimicrobial agent per aqueous preparation having a 75 wt.-% solids content of calcium carbonate.

The at least one antimicrobial agent can be further preferably selected from quaternary ammonium salts, peroxides, perchlorates, tributyl tin, heavy metals, biocidal enzymes, biocidal polypeptides, sulphonamides and mixtures thereof.

In one embodiment, it is preferred that the at least one antimicrobial agent is an alkaline stable antimicrobial agent. That is to say the at least one antimicrobial agent is preferably stable under alkaline conditions such as a pH of above 8, preferably of above 9 and most preferably of above 10.

For example, the at least one antimicrobial agent of step b) is effective against the at least one strain of bacteria and/or at least one strain of yeast and/or at least one strain of mould when present in the aqueous preparation or the at least one antimicrobial agent of step b) is effective against the at least one strain of bacteria and/or at least one strain of yeast and/or at least one strain of mould when present in the aqueous at a pH from 8 to 8.5, and/or a pH from 8.5 to 9, and/or a pH from 8.5 to 9.5, and/or a pH from 9.5 to 10 and/or a pH from 10 to 10.5.

In one embodiment of the present invention, the at least one antimicrobial agent is in an undiluted, i.e. concentrated form. In another embodiment of the present invention, the at least one antimicrobial agent is diluted to a suitable concentration before being contacted with the aqueous preparation in step d). In the diluted form, the at least one antimicrobial agent is preferably dissolved in water, wherein the corresponding diluted composition comprises preferably up to 99.0 wt.-% of the at least one antimicrobial agent, based on the total weight of the composition. More preferably, the composition in water comprises 1.0 to 95.0 wt.-% of the at least one antimicrobial agent and most preferably 1.0 to 85.0 wt.-% of the at least one antimicrobial agent, based on the total weight of the composition, whereby the composition may further comprise suitable stabilisers.

### Characterisation of step c): providing at least one source of at least one metal oxide and/or its hydrated form

According to step c) of the process of the present invention, a source of at least one metal oxide and/or its hydrated form is provided.

The term source of "at least one" metal oxide and/or its hydrated form in the meaning of the present invention means that the source comprises, preferably consists of, one or more metal oxide(s) and/or its hydrated form(s).

In one embodiment of the present invention, the source of at least one metal oxide and/or its hydrated form comprises, preferably consists of, one metal oxide or its hydrated form. Alternatively, the source of at least one metal oxide and/or its hydrated form comprises, preferably consists of, two or more water metal oxide(s) and/or its hydrated form(s). For example, the source of at least one metal oxide and/or its hydrated form comprises, preferably consists of, two or three metal oxide(s) and/or its hydrated form(s). Preferably, the source of at least one metal oxide and/or its hydrated form comprises, preferably consists of, two or more metal oxide(s) and/or its hydrated foim(s).

It is appreciated that the source of at least one metal oxide and/or its hydrated form provided in step c) of the instant process can be any material comprising, preferably consisting of, metal oxide and/or its hydrated form.

In one embodiment, the at least one metal oxide and/or its hydrated form is water soluble. Alternatively, the at least one metal oxide and/or its hydrated form converts into a water soluble form when the source of at least one metal oxide and/or its hydrated form is contacted with water, e.g. with the aqueous preparation.

Accordingly, the term "water-soluble" or "soluble in water" in the meaning of the present invention refers to systems in which at least a part of the at least one metal oxide and/or its hydrated form forms a solution with water, i.e. at least a part of the particles of the at least one metal oxide and/or its hydrated form are dissolved in the solvent.

The term "source" of at least one metal oxide and/or its hydrated form in the meaning of the present invention refers to a compound that comprises, preferably consists of, at least one metal oxide and/or its hydrated form.

Preferably, the source of at least one metal oxide and/or its hydrated form comprises the at least one metal oxide and/or its hydrated in an amount of at least 20 wt.-%, preferably at least 30 wt.-%, more preferably at least 40 and most preferably at least 50 wt.-%, such as from 70 to 100 wt.-% or from 80 to 99.95 wt.-%, based on the total dry weight of the source of at least one metal oxide and/or its hydrated form.

In one embodiment of the present invention, the source of at least one metal oxide and/or its hydrated form comprises an oxide and/or a hydrated form of an element of group 2 of the periodic table.

For example, the source of at least one metal oxide and/or its hydrated form is selected from the group comprising magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof. Preferably, the source of at least one metal oxide and/or its hydrated form is selected from the group comprising magnesium oxide, magnesium hydroxide, calcium oxide, calcium hydroxide, half burnt dolomite, burnt dolomite and mixtures thereof.

In particular, half burnt dolomite, burnt dolomite and mixtures thereof are especially preferred as the source of at least one metal oxide and/or its hydrated form of the present invention. For example, the source of at least one metal oxide and/or its hydrated form comprises preferably a mixture of magnesium oxide, magnesium hydroxide, calcium oxide, and calcium hydroxide.

In one embodiment, the source of at least one metal oxide and/or its hydrated form is magnesium oxide and/or magnesium hydroxide. For example, the source of at least one metal oxide and/or its hydrated form is magnesium oxide or magnesium hydroxide. Alternatively, the source of at least one metal oxide and/or its hydrated form is magnesium oxide and magnesium hydroxide.

Metal oxides can be generated from their carbonate form by heating to different temperature. For example, burnt dolomite for instance can be produced from dolomite by heating above 1000 °C until all CO₂ is released from the MgCO₃ and CaCO₃ leaving CaO and MgO. Half burnt dolomite, for example, can be produced from dolomite by heating to about 650 °C until all CO₂ is released from the MgCO₃ but not CaCO₃ leaving a combination of MgO and CaCO₃. As further example, MgO and other metal oxides can be generated directly in the mineral by adding defined amounts of MgCO₃ or other carbonate salts and burning the mixture at variable temperatures and for variable times to the desired metal oxide content.

It is appreciated that the metal oxide and/or its hydrated form may be also provided as an impurity of another compound, e.g. in combination with natural ground calcium carbonate.

In general, the source of at least one metal oxide and/or its hydrated form can be provided in form of an aqueous solution, aqueous suspension or a dry material. If the source of at least one metal oxide and/or its hydrated form is provided in form of an aqueous solution, the aqueous solution comprises the source of at least one metal oxide and/or its hydrated form in an amount from 1.0 to 45.0 wt.-%, preferably from 5.0 to 25.0 wt.-%, based on the total weight of the aqueous solution.

If the source of at least one metal oxide and/or its hydrated form is provided in form of an aqueous suspension, the aqueous suspension comprises the source of at least one metal oxide and/or its hydrated form in an amount from 1.0 to 60.0 wt.-%, preferably from 5.0 to 50.0 wt.-% and more preferably from 15.0 to 45.0 wt.-% based on the total weight of the aqueous suspension.

Preferably, the source of at least one metal oxide and/or its hydrated form is provided in the form an aqueous suspension.

### Characterisation of step d): contacting the aqueous preparation with the at least one antimicrobial agent

According to step d) of the process of the present invention, the aqueous preparation of step a) is contacted with the at least one antimicrobial agent of step b).

It is thus appreciated that the at least one antimicrobial agent is preferably effective against at least one strain of bacteria and/or at least one strain of yeast and/or at least one strain of mould in the aqueous preparation when the at least one antimicrobial agent is present. Alternatively, the at least one antimicrobial agent of step b) is effective against the at least one strain of bacteria and/or at least one strain of yeast and/or at least one strain of mould when present in the aqueous preparation in the presence of the source of at least one metal oxide and/or its hydrated form. This either prevents the microbial growth of the at least one strain of bacteria and/or at least one strain of yeast and/or at least one strain of mould or leads to a reduction of the cfu value (colony forming unit) in the treated aqueous preparation.

In one embodiment of the present invention, the at least one strain of bacteria is selected from the group consisting of gram-negative bacteria, gram-positive bacteria and mixtures thereof.

It is appreciated that gram-positive and gram-negative bacteria are well known in the art and are e.g. described in Biology of Microorganisms, "Brock", Madigan MT, Martinko JM, Parker J, 1997, 8th Edition. In particular, such bacteria represent evolutionary very distantly related classes of bacteria each comprising of many bacterial families. Gram negative bacteria are characterized by two membranes (outer and inner membrane) while gram positive bacteria contain only one membrane. Usually, the former contains a high amount of lipopolysaccharide and a thin single-layer of peptidoglycan, while the latter has virtually no lipopolysaccharide, a multi-layered thick peptidoglycan and the coat contains teichoic acids. For these differences the Gram positive and Gram negative bacteria react differently on environmental influences. Methods for discriminating gram-positive and gram-negative bacteria include species identification by DNA sequencing techniques or biochemical characterisations. Alternatively, the number of membranes can be determined directly by thin section transmission electron microscopy.

The term "at least one strain of bacteria" in the meaning of the present invention means that the strain of bacteria comprises, preferably consists of, one or more strains of bacteria.

In one embodiment of the present invention, the at least one strain of bacteria comprises, preferably consists of, one strain of bacteria. Alternatively, the at least one strain of bacteria comprises, preferably consists of, two or more strains of bacteria. For example, the at least one strains of bacteria comprises, preferably consists of, two or three strains of bacteria. Preferably, the at least one strain of bacteria comprises, preferably consists of, two or more strains of bacteria.

For example, the at least one strain of bacteria is selected from the group comprising *Methylobacterium sp., Salmonella sp., Escherichia sp.* such as *Escherichia coli, Shigella sp., Enterobacter sp., Pseardomonas sp.* such as *Pseudomonas mendocina, Pseardomonas stutzeri Pseardomonas aeruginosa*, and/or *Pseudomonas putida, Barrk7zolderia sp.* such as *Burkholderia cepacia, Bdellovibrio sp., Agrobacteriarm sp., Alcaligenes sp.* such as *Alcaligenes faecalis, Flavobacterium sp., Ochrobactrum sp. such as Ochrobactrum tritici, Kocuria sp.* such as *Kocuria rhizophila*, *Rhizobium sp. such as Rhizobium radiobacter, Sphingobacterium sp., Aeromonas sp., Chromobacterium sp., Vibrio sp., Hyphomicrobium sp., Leptothrix sp., Micrococcus sp., Staphylococcus sp.* such as *Staphylococcus aureus, Agromyces sp., Acidovorax sp., Commomonas sp.* such as *Comomonas aquatic, Brevundimonas sp., Spingobium sp.* such as *Spingobium yanoikuyae*, *Thauera sp.* such as *Thauera mechernichensis, Caldimonas sp., Hdrogenophaga sp., Teipidomonas sp.,* and mixtures thereof.

For example, the at least one strain of bacteria is selected from *Escherichia* sp. such as *Escherichia coli, Staphylococcus* sp. such as *Staphylococcus aureus,* and mixtures thereof.

Additionally or alternatively, the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus sp.* such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof.

The term "at least one strain of yeast" in the meaning of the present invention means that the strain of yeast comprises, preferably consists of, one or more strains of yeast.

In one embodiment of the present invention, the at least one strain of yeast comprises, preferably consists of, one strain of yeast. Alternatively, the at least one strain of yeast comprises, preferably consists of, two or more strains of yeast. For example, the at least one strains of yeast comprises, preferably consists of, two or three strains of yeast. Preferably, the at least one strain of yeast comprises, preferably consists of, two or more strains of yeast.

Additionally or alternatively, the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

The term "at least one strain of mould" in the meaning of the present invention means that the strain of mould comprises, preferably consists of, one or more strains of mould.

In one embodiment of the present invention, the at least one strain of mould comprises, preferably consists of, one strain of mould. Alternatively, the at least one strain of mould comprises, preferably consists of, two or more strains of mould. For example, the at least one strains of mould comprises, preferably consists of, two or three strains of mould. Preferably, the at least one strain of mould comprises, preferably consists of, two or more strains of mould.

It is preferred that the at least one antimicrobial agent is effective against at least one strain of bacteria and at least one strain of yeast and at least one strain of mould when present in the aqueous preparation or when present in the aqueous preparation in the presence of the source of at least one metal oxide and/or its hydrated form.

Alternatively, the at least one antimicrobial agent is effective against at least one strain of bacteria or at least one strain of yeast or at least one strain of mould when present in the aqueous preparation or when present in the aqueous preparation in the presence of the source of at least one metal oxide and/or its hydrated form.

Alternatively, the at least one antimicrobial agent is effective against at least one strain of bacteria and at least one strain of yeast or at least one strain of mould when present in the aqueous preparation or when present in the aqueous preparation in the presence of the source of at least one metal oxide and/or its hydrated form or the at least one antimicrobial agent is effective against at least one strain of bacteria or at least one strain of yeast and at least one strain of mould when present in the aqueous preparation or when present in the aqueous preparation in the presence of the source of at least one metal oxide and/or its hydrated form.

In general, the aqueous preparation of step a) and the at least one antimicrobial agent of step b) can be brought into contact by any conventional means known to the skilled person.

It is appreciated that contacting step d) is preferably carried out by adding the at least one antimicrobial agent of step b) to the aqueous preparation of step a).

In one embodiment of the present invention, the step of contacting the aqueous preparation of step a) with the at least one antimicrobial agent of step b) is carried out in that the at least one antimicrobial agent is added to the aqueous preparation under mixing. A sufficient mixing may be achieved by shaking the aqueous preparation or by agitation, which may provide a more thorough mixing. In one embodiment of the present invention, contacting step d) is carried out under agitation to ensure a thorough mixing of the aqueous preparation and the at least one antimicrobial agent. Such agitation can be carried out continuously or discontinuously.

In one embodiment, contacting step d) is carried out in that the at least one antimicrobial agent is added to the aqueous preparation in an amount such that the total amount of the at least one antimicrobial agent in the aqueous preparation is from 0.5 to 6 000 ppm, calculated relative to the weight of water in the aqueous preparation. Preferably, the aqueous preparation is contacted with the at least one antimicrobial agent such that the at least one antimicrobial agent is present in the water phase of the aqueous preparation in a total amount of from 0.5 to 6 000 ppm, calculated relative to the weight of water in the aqueous preparation.

For example, contacting step d) is carried out in that the at least one antimicrobial agent is added to the aqueous preparation in an amount of from 1 ppm to 5 000 ppm, calculated relative to the weight of water in the aqueous preparation. Alternatively, contacting step d) is carried out in that the at least one antimicrobial agent is added to the aqueous preparation in an amount of from 1 ppm to 4 000 ppm, calculated relative to the weight of water in the aqueous preparation.

Additionally or alternatively, contacting step d) is carried out in that the at least one antimicrobial agent is added to the aqueous preparation in an amount being at least 10 % below the minimum inhibitory concentration (MIC) of the at least one antimicrobial agent determined in the absence of the metal oxide and/or its hydrated form for the at least one strain of bacteria and/or at least one strain of yeast and/or at least one strain of mould.

For example, contacting step d) is carried out in that the at least one antimicrobial agent is added to the aqueous preparation in an amount being at least 25 %, preferably at least 50 % and most preferably at least 75 %, below the minimum inhibitory concentration (MIC) of the at least one antimicrobial agent determined in the absence of the metal oxide and/or its hydrated form for the at least one strain of bacteria and/or at least one strain of yeast and/or at least one strain of mould.

In one embodiment of the present invention, the aqueous preparation is contacted with the at least one antimicrobial agent such that the at least one antimicrobial agent is present in the aqueous preparation in an amount of from 0.5 to 6 000 ppm, preferably of from 1 ppm to 5 000 ppm, and most preferably of from 1 ppm to 4 000 ppm, calculated relative to the weight of water in the aqueous preparation and such that the at least one antimicrobial agent is added to the aqueous preparation in an amount being at least 10 %, preferably at least 25 %, more preferably at least 50 % and most preferably at least 75 %, below the minimum inhibitory concentration (MIC) of the at least one antimicrobial agent determined in the absence of the metal oxide and/or its hydrated form for the at least one strain of bacteria and/or at least one strain of yeast and/or at least one strain of mould.

It is appreciated that contacting step d) can be repeated one or more times.

The aqueous preparation obtained in step d) preferably has solids content corresponding to the solids content of the aqueous preparation provided in step a). It is thus appreciated that the aqueous preparation obtained in step d) preferably has solids content of up to 85.0 wt.-%. For example, the solids content of the aqueous preparation obtained in step d) is from 10.0 to 82.0 wt.-%, and more preferably from 20.0 to 80.0 wt.-%, based on the total weight of the aqueous preparation obtained in step d).

Additionally or alternatively, the pH of the aqueous preparation obtained in step d) preferably corresponds to the pH of the aqueous preparation provided in step a). Thus, the aqueous preparation obtained in step d) preferably has a pH value of from 2 to 12. For example, the aqueous preparation obtained in step d) has a pH value of from 6 to 11.5 and more preferably from 7 to 10.5.

Typically, the aqueous preparations obtained in step d) has a viscosity being preferably in the range from 50 to 2 000 mPa·s and preferably from 80 to 800 mPa·s, as measured with a Brookfield DV-II Viscometer at a speed of 100 rpm and equipped with a LV-3 spindle.

### Characterisation of step e): contacting the aqueous preparation with the at least one source of at least one metal oxide and/or its hydrated form

According to step e) of the process of the present invention, the aqueous preparation of step a) is contacted before and/or during and/or after step d) with the source of at least one metal oxide and/or its hydrated form of step c).

The aqueous preparation of step a) and the source of at least one metal oxide and/or its hydrated form of step c) can be brought into contact by any conventional means known to the skilled person.

It is appreciated that contacting step e) is preferably carried out by adding the source of at least one metal oxide and/or its hydrated form of step c) to the aqueous preparation of step a) before and/or during and/or after adding the at least one antimicrobial agent of step b) to the aqueous preparation of step a).

For example, the source of at least one metal oxide and/or its hydrated form is preferably added into the aqueous preparation by mixing. A sufficient mixing may be achieved by shaking or by agitation, which may provide a more thorough mixing. In one embodiment of the present invention, contacting step e) is carried out under agitation to ensure a thorough mixing of the aqueous preparation and the source of at least one metal oxide and/or its hydrated form. Such agitation can be carried out continuously or discontinuously.

In one embodiment of the present invention, the step of contacting the aqueous preparation of step a) with the source of at least one metal oxide and/or its hydrated form of step c) is carried out in that the source of at least one metal oxide and/or its hydrated form is added to the aqueous preparation before and during and after adding the at least one antimicrobial agent to the aqueous preparation.

Alternatively, contacting step e) is carried out by adding the source of at least one metal oxide and/or its hydrated form of step c) to the aqueous preparation before and after adding the at least one antimicrobial agent to the aqueous preparation. Alternatively, contacting step e) is carried out by adding the source of at least one metal oxide and/or its hydrated form of step c) to the aqueous preparation before and during adding the at least one antimicrobial agent to the aqueous preparation. Alternatively, contacting step e) is carried out by adding the source of at least one metal oxide and/or its hydrated form of step c) to the aqueous preparation during and after adding the at least one antimicrobial agent to the aqueous preparation.

In case the source of at least one metal oxide and/or its hydrated form of step c) is added to the aqueous preparation before and during and after or before and during or during and after or before and after adding the at least one antimicrobial agent to the aqueous preparation, the source of at least one metal oxide and/or its hydrated form of step c) is preferably added in several portions and/or continuously over the period required for contacting the aqueous preparation with the source of at least one metal oxide and/or its hydrated form of step c).

If the source of at least one metal oxide and/or its hydrated form of step c) is added in several portions, source of at least one metal oxide and/or its hydrated form of step c) can be added in about equal portions or unequal portions to the aqueous preparation.

In one embodiment of the present invention, contacting step e) is carried out in that the source of at least one metal oxide and/or its hydrated form of step c) is added to the aqueous preparation of step a) before or during or after adding the at least one antimicrobial agent to the aqueous preparation.

For example, contacting step e) is carried out by adding the source of at least one metal oxide and/or its hydrated form of step c) to the aqueous preparation before or during adding the at least one antimicrobial agent to the aqueous preparation. Alternatively, contacting step e) is carried out by adding the source of at least one metal oxide and/or its hydrated form of step c) to the aqueous preparation before or after adding the at least one antimicrobial agent to the aqueous preparation. Alternatively, contacting step e) is carried out by adding the source of at least one metal oxide and/or its hydrated form of step c) to the aqueous preparation during or after adding the at least one antimicrobial agent to the aqueous preparation.

In one embodiment of the present invention, contacting step e) is carried out by adding the source of at least one metal oxide and/or its hydrated form of step c) to the aqueous preparation before adding the at least one antimicrobial agent to the aqueous preparation. Alternatively, contacting step e) is carried out by adding the source of at least one metal oxide and/or its hydrated form of step c) to the aqueous preparation during adding the at least one antimicrobial agent to the aqueous preparation. Alternatively, contacting step e) is carried out by adding the source of at least one metal oxide and/or its hydrated form of step c) to the aqueous preparation after adding the at least one antimicrobial agent to the aqueous preparation.

Especially good results are obtained in case contacting step e) is carried out by adding the source of at least one metal oxide and/or its hydrated form of step c) to the aqueous preparation before adding the at least one antimicrobial agent to the aqueous preparation. Thus, it is preferred that contacting step e) is carried out before contacting step d).

Alternatively, the source of at least one metal oxide and/or its hydrated form of step c) is added to the aqueous preparation in combination with the at least one antimicrobial agent of step b) as finished mixture. In this embodiment, the source of at least one metal oxide and/or its hydrated form of step c) is thus preferably added to the aqueous preparation during contacting step d) is carried out. For example, contacting step e) of the instant process is carried out by adding a finished mixture comprising the source of at least one metal oxide and/or its hydrated form of step c) and the at least one antimicrobial agent of step b) to the aqueous preparation of step a).

If the at least one antimicrobial agent of step b) and the source of at least one metal oxide and/or its hydrated form of step c) are provided in form a mixture, the mixture can be present in any appropriate form, e.g. in the form of a dry material or in the form of an aqueous solution or aqueous suspension.

If the source of at least one metal oxide and/or its hydrated form of step c) is added to the aqueous preparation before or during or after adding the at least one antimicrobial agent to the aqueous preparation, the source of at least one metal oxide and/or its hydrated form is preferably added in one portion and/or continuously before or during or after adding the at least one antimicrobial agent to the aqueous preparation.

Accordingly, the at least one antimicrobial agent and the source of at least one metal oxide and/or its hydrated form can be added separately (first the at least one antimicrobial agent and then the source of at least one metal oxide and/or its hydrated form or vice versa) or simultaneously (e.g. as an aqueous mixture) to the aqueous preparation. Furthermore, the at least one antimicrobial agent and/or the source of at least one metal oxide and/or its hydrated form can be added once or several times, e.g. in specific time intervals, to the aqueous preparation. Preferably, the source of at least one metal oxide and/or its hydrated form is added once and the at least one antimicrobial agent is added once or several times, e.g. in specific time intervals, to the aqueous preparation.

It is appreciated that contacting step e) can be repeated one or more times.

It is one requirement of the present invention that contacting step e) is carried out such that the total amount of the at least one metal oxide and/or its hydrated form in the aqueous preparation is at least 100 ppm, calculated relative to the weight of water in the preparation. More preferably, contacting step e) is carried out such that the at least one metal oxide and/or its hydrated form is present in the water phase of the aqueous preparation in a total amount of at least 100 ppm, calculated relative to the weight of water in the preparation.

For example, contacting step e) is carried out such that the total amount of the at least one metal oxide and/or its hydrated form in the aqueous preparation is in the range from 100 to 10000 ppm, preferably from 100 to 8 000 ppm, and most preferably from 100 to 5 000 ppm, calculated relative to the weight of water in the preparation. Preferably, contacting step e) is carried out such that the at least one metal oxide and/or its hydrated form is present in the water phase of the aqueous preparation in a total amount in the range from 100 to 10 000 ppm, preferably from 100 to 8 000 ppm, and most preferably from 100 to 5 000 ppm, calculated relative to the weight of water in the preparation. Most preferably, contacting step e) is carried out such that the at least one metal oxide and/or its hydrated form is present in the water phase of the aqueous preparation in a total amount in the range from 100 to 2 000 ppm, preferably from 100 to 1 500 ppm, and most preferably from 100 to 1 000 ppm, calculated relative to the weight of water in the preparation.

It is to be noted that the aforementioned figures reflect the amount of metal oxide and/or its hydrated form being added via the source of at least one metal oxide and/or its hydrated form to an aqueous preparation and do not cover any dissolved metal ions which may naturally be present in the aqueous preparation.

The amount of the source of at least one metal oxide and/or its hydrated form added to the aqueous preparation can be individually adjusted depending on the at least one antimicrobial agent to be added into the aqueous preparation. In particular, the amount of the source of at least one metal oxide and/or its hydrated form depends on the nature and the occurrence of the at least one antimicrobial agent to be used in the aqueous preparation. The optimum amount to be employed within the defined ranges can be determined by preliminary tests and test series on a laboratory scale and by supplementary operational tests.

As already mentioned above, the metal oxide and/or its hydrated form of the source of at least one metal oxide and/or its hydrated form effect a reduction of the minimum inhibitory concentration of the at least one antimicrobial agent being effective against at least one strain of bacteria and/or at least one strain of yeast and/or at least one strain of mould in the aqueous preparation.

Thus, the aqueous preparation comprises the at least one antimicrobial agent in an amount being below the minimum inhibitory concentration (MIC) of the same antimicrobial agent in the absence of the at least one metal oxide and/or its hydrated form.

It is thus appreciated that the aqueous preparation obtained by the process comprises the at least one antimicrobial agent in an amount being at least 10 %, preferably at least 25 %, more preferably at least 50 % and most preferably at least 75 %, below the minimum inhibitory concentration (MIC) of the at least one antimicrobial agent determined in the absence of the metal oxide and/or its hydrated form for the at least one strain of bacteria and/or at least one strain of yeast and/or at least one strain of mould.

The aqueous preparation obtained by the process is preferably an aqueous slurry.

The aqueous preparation preferably has solids content of up to 85.0 wt.-%. For example, the solids content of the aqueous preparation is from 10.0 to 82.0 wt.-%, and more preferably from 20.0 to 80.0 wt.-%, based on the total weight of the aqueous preparation.

It is appreciated that the aqueous preparation obtained in step e) preferably has a pH being above the pH of the aqueous preparation provided in step a) and/or the aqueous preparation obtained in step d).

Thus, the aqueous preparation obtained in step e) preferably has a pH value of above 8. Preferably, the aqueous preparation has a pH value of above 9, more preferably above 9.2, even more preferably above 9.4, even further more preferably above 9.6, still more preferably above 9.8 and most preferably of above 10, e.g. from 10 to 10.5.

For example, the aqueous preparation obtained in step e) has a pH value in the range from 9 to 12, preferably from 9.2 to 12, more preferably from 9.4 to 12, even more preferably from 9.6 to 12, still more preferably from 9.8 to 12 and most preferably from 10 to 12. Alternatively, the aqueous preparation obtained in step e) has a pH value in the range from 9 to 11.5, preferably from 9.2 to 11.5, more preferably from 9.4 to 11.5, even more preferably from 9.6 to 11.5, still more preferably from 9.8 to 11.5 and most preferably from 10 to 11.5. Alternatively, the aqueous preparation obtained in step e) has a pH value in the range from 9 to 10.5, preferably from 9.2 to 10.5, more preferably from 9.4 to 10.5, even more preferably from 9.6 to 10.5, still more preferably from 9.8 to 10.5 and most preferably from 10 to 10.5.

In one embodiment, the pH of the aqueous preparation obtained in step e) is preferably ≥ 0.1 pH units, more preferably ≥ 0.2 pH units, even more preferably ≥ 0.3 pH units, still more preferably ≥ 0.5 pH units, even more preferably ≥ 1.0 pH units and most preferably ≥ 2 pH units above the pH of the aqueous preparation provided in step a) and/or the aqueous preparation obtained in step d).

Typically, the aqueous preparation obtained by the process has a viscosity being preferably in the range from 50 to 800 mPa·s and preferably from 80 to 600 mPa·s, as measured with a Brookfield DV-II Viscometer at a speed of 100 rpm and equipped with a LV-3 spindle.

The aqueous preparation is preferably obtainable by the process of the instant invention, i.e. the process for stabilising an aqueous preparation against microbial growth as defined above.

A further aspect of the present thus refers to an aqueous preparation stabilised against microbial growth obtainable by a process as defined herein.

Another aspect of the present invention refers to an aqueous preparation stabilised against microbial growth comprising at least one antimicrobial agent in an amount such that the total amount of the at least one antimicrobial agent in the aqueous preparation is from 0.5 ppm to 6 000 ppm, calculated relative to the weight of water in the aqueous preparation.

Additionally, the aqueous preparation comprises a source of at least one metal oxide and/or its hydrated form such that the total amount of the at least one metal oxide and/or its hydrated form in the aqueous preparation is at least 100 ppm, calculated relative to the weight of water in the aqueous preparation.

With regard to the definition of the aqueous preparation, the at least one antimicrobial agent, the source of at least one metal oxide and/or its hydrated form and preferred embodiments thereof, reference is made to the statements provided above when discussing the technical details of the process of the present invention.

The inventive process or aqueous preparation thus provides a number of improved properties. First of all, the addition of at least one antimicrobial agent in combination with the source of at least one metal oxide and/or its hydrated form stabilises an aqueous preparation against microbial growth. The inventive process thus allows for the reduction of the antimicrobial agent concentration in an aqueous preparation maintaining and/or improving the antimicrobial activity without using toxic additives. Furthermore, the combination of the at least one antimicrobial agent with the source of at least one metal oxide and/or its hydrated form provides sufficient antimicrobial activity in aqueous preparations at reduced antimicrobial agent concentration, i.e. at an antimicrobial agent concentration which is below the minimum inhibitory concentration (MIC) of the respective antimicrobial agent in the absence of a compound reducing the minimum inhibitory concentration. In addition thereto, the pH of an aqueous preparation can be stabilised by the present process.

The addition of the source of at least one metal oxide and/or its hydrated form in the inventive process or preparations results in a reduced or prevented microbial growth of at least one strain of bacteria and/or at least one strain of yeast and/or at least one strain of mould in the aqueous preparation and thus the tendency of alterations of these preparations is reduced, while low viscosity, the brilliance of the colour and the odour quality of the preparations can be maintained. Furthermore, the stabilisation of such preparations against attack and destruction by at least one strain of bacteria and/or at least one strain of yeast and/or at least one strain of mould in an aqueous preparation, results in a good microbiological quality of the preparations.

In view of the goods results obtained, the present invention refers in a further aspect to the use of a source of at least one metal oxide and/or its hydrated form for reducing the amount of an antimicrobial agent against at least one strain of bacteria and/or at least one strain of yeast and/or at least one strain of mould in an aqueous preparation. It is appreciated that the amount of the antimicrobial agent in the aqueous preparation is at least 10 %, preferably at least 25 %, more preferably at least 50 % and most preferably at least 75 %, below the minimum inhibitory concentration (MIC) of the at least one antimicrobial agent, the MIC being determined in absence of the metal oxide and/or its hydrated form for the at least one strain of bacteria and/or at least one strain of yeast and/or at least one strain of mould.

In another aspect, the present invention refers to use of a composition as an antimicrobial composition in an aqueous preparation optionally comprising at least one strain of bacteria and/or at least one strain of yeast and/or at least one strain of mould. The composition comprising
a) at least one antimicrobial agent in an amount such that the total amount of the at least one antimicrobial agent in the aqueous preparation is from 0.5 ppm to 6 000 ppm, calculated relative to the weight of water in the aqueous preparation, and
b) a source of at least one metal oxide and/or its hydrated form such that the total amount of the at least one metal oxide and/or its hydrated form in the aqueous preparation is at least 100 ppm, calculated relative to the weight of water in the aqueous preparation.

In a further aspect, the present invention refers to the use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide. for increasing the pH of an aqueous preparation, as defined herein, to a pH of above 8, preferably of above 9, e.g. above 9.2, more preferably above 9.4, even more preferably above 9.6, still more preferably above 9.8, and most preferably of above 10, e.g. from 10 to 10.5.

For example, magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide, is/are used for increasing the pH of an aqueous preparation, as defined herein, to a pH value in the range from 8 to 12, preferably from 9 to 12, more preferably from 9.2 to 12, even more preferably from 9.4 to 12, even further more preferably from 9.6 to 12, still more preferably from 9.8 to 12 and most preferably from 10 to 12. Alternatively, magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide, is/are used for increasing the pH of an aqueous preparation, as defined herein, to a pH value in the range from 8 to 11.5, preferably from 9 to 11.5, more preferably from 9.2 to 11.5, even more preferably from 9.4 to 11.5, even further more preferably from 9.6 to 11.5, still more preferably from 9.8 to 11.5 and most preferably from 10 to 11.5. Alternatively, magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide, is/are used for increasing the pH of an aqueous preparation, as defined herein, to a pH value in the range from 8 to 10.5, preferably from 9 to 10.5, more preferably from 9.2 to 10.5, even more preferably from 9.4 to 10.5, even further more preferably from 9.6 to 10.5, still more preferably from 9.8 to 10.5 and most preferably from 10 to 10.5.

Preferably, the increase of the pH is such that the pH of the aqueous preparation obtained is ≥ 0.1 pH units, more preferably ≥ 0.2 pH units, even more preferably ≥ 0.3 pH units, still more preferably ≥ 0.5 pH units, even more preferably ≥ 1.0 pH units and most preferably ≥ 2 pH units above the pH of an aqueous preparation treated the same way but without using magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide.

According to another aspect, the present invention refers to the use of an aqueous preparation stabilised against microbial growth, as defined herein, in paper, plastics, polymer compositions, paints, coatings, concrete and/or agriculture applications.

With regard to the definition of the source of at least one metal oxide and/or its hydrated form, the antimicrobial agent, the aqueous preparation, the at least one strain of bacteria and/or at least one strain of yeast and/or at least one strain of mould and preferred embodiments thereof, reference is made to the statements provided above when discussing the technical details of the process of the present invention.

The following examples are meant to illustrate the invention without restricting its scope.

### Examples

### Measurement Methods

The following measurement methods are used to evaluate the parameters given in the description, examples and claims.

### BET specific surface area of a material

The BET specific surface area was measured via the BET process according to ISO 9277 using nitrogen.

### Particle size distribution (mass % particles with a diameter < X) and weight median diameter (d₅₀) of a particulate material

Weight median grain diameter and grain diameter mass distribution of a particulate material were determined via the sedimentation process, i.e. an analysis of sedimentation behaviour in a gravitational field. The measurement was made with a Sedigraph™ 5100 of Micromeritics Instrument Corporation.

The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonics.

### pH measurement

The pH of the water samples is measured by using a standard pH-meter at approximately 25°C.

### Brookfield-viscosity

All Brookfield-viscosities are measured with a Brookfield DV-II Viscometer equipped with a LV-3 spindle at a speed of 100 rpm and room temperature (20 ± 3 °C).

### Amount of additives

Unless otherwise stated, all amounts quoted in ppm represent mg values per kilogram of water in the aqueous preparation. Concentrations are further quoted in mmol/kg (millimol per kilogram) or mol/l (mol per litre) according to the International System of Units in the water of the aqueous preparation.

### Bacterial count

All quoted bacterial counts in the Tables here below are either cfu/ml (colony forming units per millilitre) or cfu/plate (colony forming units per plate) wherein cfu/ml were determined after 2-5 days following plate-out and in accordance with counting method described in "Bestimmung von aeroben mesophilen Keimen", Schweizerisches Lebensmittelbuch, chapter 56, section 7.01, edition of 1985, revised version of 1988. Unless otherwise stated, per tryptic soy agar plate (TSA, prepared using BD 236950) 0.1ml of a 1:10 dilution in phosphate buffered saline (PBS; pH= 7.4, 137 mmol/l NaCl, 2.7 mmol/l KCl, 10 mmol/l Na₂HPO₄, 1.8 mmol/l KH₂PO₄) was plated. Counts from 10 000 cfu/ml to 99 999 cfu/ml are reported as >10 000 cfu/ml. Counts of 100 000 cfu/ml and above are reported as >100 000 cfu/ml. The counting method for cfu/plate was as follows. The aqueous preparations were stirred well with a cotton swap (e.g. Applimed SA, No. 1102245); the excess aqueous preparation was removed by dipping it gently to the side of the aqueous preparation container, leaving approximately 200 mg of aqueous preparation on the swap. Then three even streaks were made on a tryptic soy agar plate (TSA, prepared using BD 236950) from right to left and three more from top to bottom. TSA plates were then incubated for 48 h at 30°C. Colony forming units (cfu) were then counted and reported as cfu/plate. Counts from 100 to 999 cfu per plate are reported as > 100 cfu/plate. Counts of 1 000 cfu and above per plate are reported as > 1 000 cfu/plate.

### Solids content

The solids content is measured using a Moisture Analyzer of Mettler-Toledo MJ33. The method and the instrument are known to the skilled person.

### Preparation of bacteria

Fresh bacteria cultures of the bacteria were prepared by dilution streaking onto a tryptic soy agar plate (TSA, Becton Dickinson no. 236950) and incubation for 16 to 20 h at 35°C. The bacteria were either environmental clonal isolates from calcium carbonate slurries, identified by 16S rRNA sequencing as *Comomonas aquatic*, *Pseudomonas stutzeri*, *Thauera mechernichensis, Brevundimonas intermedia, Rhizobium radiobacter, Spingobium yanoikuyae*, *Caldimonas sp., Hydrogenophaga sp.,* and/or the commercially available bacteria *Escherichia coli* DSM 1576 and *Staphylococcus aureus* strains DSM 346.

For the preparation of an overnight culture of bacterium species, fresh bacteria were used to inoculate separately 3-5 ml TSB (Fluka 22092). The inoculated TSB was incubated for 16 to 20 h at 30°C with agitation at 150 rotations per minutes (rpm) For the preparation of a fresh adapted culture of a single bacterium species, 50 g calcium carbonate slurry were inoculated with 0.2 ml overnight culture and incubated for 72 h at 30°C.

For the preparation of an adapted mixture culture consisting of multiple species, fresh adapted cultures of a single bacterium species were combined at equal ratios.

### Minimum inhibitory concentration (MIC)

For determining the MIC, the tested microorganism, i.e. the strain of bacteria and/or strain of yeast and/or strain of mould, were freshly grown until the end of the logarithmic growth phase according to the requirements of the individual species to a density of approximately 10⁷-10⁹ cells/ml.

For example, fresh bacteria cultures of the bacteria *E.coli,* e.g. *E.coli* DSM 1576, and *S*.*aureus*, e.g. *S*.*aureus* strains DSMZ 346, were prepared by inoculation of 3 ml liquid growth media (tryptic soy broth, e.g. Fluka Cat. No. 22092) from a stock culture and incubation for 16 to 20 h at 30°C with agitation at 150 rotations per minutes (rpm) leading to a cell density of approximately 2×10⁸ cells/ml.

Metal oxide and/or its hydrated form were added to the aqueous preparation (e.g. CaCO₃ slurry) as indicated.

The antimicrobial agent to be tested was added to the aqueous preparation, e.g. CaCO₃ slurry, with or without metal oxide in increasing concentrations starting from 0 ppm (= without antimicrobial agent). The concentrations ranged from concentrations higher than recommended by the supplier, to very low amounts (as low as 1 ppm or less). Of each antimicrobial agent concentration a 3 ml sample of aqueous preparation was combined with 20 µl fresh bacterial culture.

If a curative MIC was tested, the bacteria were added to the aqueous preparation before the antimicrobial agent and the metal oxide and/or its hydrated form was added, using 20 µl of a fresh bacterial culture per 3 ml of aqueous preparation or 0.1 ml of a fresh adapted culture from a slurry per 3 ml of aqueous preparation.

All samples were incubated at 30 °C for 24 h. After incubation colony forming units (cfu) per plate (cfu/plate) were determined as described above under bacterial count.

The MIC for bacteria is defined as the lowest concentration of antimicrobial agent in the presence or absence of metal oxide and/or its hydrated form amongst all samples tested, where the bacterial concentration dropped below 100 cfu/plate. The MIC for yeast and mould is defined as the lowest concentration of antimicrobial agent in the presence or absence of metal oxide and/or its hydrated form amongst all samples tested, where the microbial concentration dropped below 20 cfu/plate. The test was valid only, if the sample without antimicrobial agent showed more than 100 cfu/plate for bacteria and more than 20 cfu/plate for yeast and mould. If none of the samples containing the respective antimicrobial agent dropped below 100 cfu/plate for bacteria and below 20 cfu/plate for yeast and mould the MIC was reported as > highest antimicrobial agent concentration tested (e.g. > 1 000 ppm).

### Example 1: Characterization of inorganic particulate materials.

The composition of different inorganic particulate materials was determined by X-ray diffraction (XRD) analysis known to the person skilled. Briefly, samples were analysed with a Bruker D8 Advance powder diffractometer obeying Bragg's law. This diffractometer consists of a 2.2 kW X-ray tube, a sample holder, a ϑ- ϑ goniometer, and a VÅNTEC-1 detector. Nickel-filtered Cu Kα radiation was employed in all experiments. The profiles were chart recorded automatically using a scan speed of 0.7° per minute in 2 ϑ. The resulting powder diffraction pattern was used to classify the material contents using appropriate software and databases. In this study the DIFFRACsuite software packages EVA and SEARCH, based on reference patterns of the ICDD PDF 2 database were used. Quantitative calculation was carried out with EVA software calculating the quantitative amount relative to the peak to background area.

The "burnt dolomite" consisted of 1.9 wt.-% calcite (crystalline form of calcium carbonate, CaCO₃), 1.0 wt.-% dolomite (crystalline CaMg(CO₃)₂), 55.2 wt.-% lime (calcium oxide, CaO), 38.7 wt.-% periclase (magnesium oxide, MgO), 0.3 wt.-% quarz (SiO₂), 2.6 wt.-% anhydrite/ bassanite (CaSO₄. / CaSO₄ 0.5H₂O) and 0.2 wt.-% maghemite (Fe₂O₃). All wt.-% are based on the total dry weight of the burnt dolomite.

The "half burnt dolomite" consisted of 70.7 wt.-% calcite (crystalline form of calcium carbonate, CaCO₃), 0.5 wt.-% dolomite (crystalline CaMg(CO₃)₂) and 28.8 wt.-% periclase (magnesium oxide, MgO). All wt.-% are based on the total dry weight of the half burnt dolomite.

Pure MgO (CAS No 1309-48-4) had a purity of 99.7 wt.-% and a BET specific surface area of 186 m²/g and a median particle size of *d*₅₀ 2.44 µm.

### Example 2: Preparation of calcium carbonate slurries

Unless otherwise stated, the calcium carbonate slurries used had solid contents in the range from 75 to 78 wt.-%, based on the total weight of the slurries. The solids of the slurries consisted of 86.5 wt.-% calcium carbonate and 13.5 wt.-% dolomite (crystalline CaMg(CO₃)₂, corresponding to 6.17 wt.-% MgCO₃), based on the total weight of the solids, as determined by XRD analysis.

These aqueous slurries of calcium carbonate (Austrian marble; *d*₅₀ = 10 µm; 21% < 2 µm) can be prepared as follows. The slurry was wet ground at 95 °C using 0.6 wt.-% in respect to dry solids material of a sodium / calcium neutralised polyacrylate grinding agent (Mw 6 000) in a 200 l vertical ball mill to a final particle size distribution of *d*₅₀ = 0.7 µm; 90 wt.-% < 2 µm. For some slurries, additives, such as MgO or half burnt dolomite, were added prior grinded at 1 000 ppm based on dry weight and grinded together with the carbonates.

### Example 3: Three-challenge Preservation test

The indicated amounts of ingredients were introduced into 50 g samples of calcium carbonate slurry (76.4 wt.-% solids content). As antimicrobial agent methylisothiazolinone (MIT, CAS No. 2682-20-4) was dosed as 20 wt.-% solution. Pure MgO was dosed from a suspension containing water and MgO with a purity of 99.7 wt.-% MgO as described in Example 1, based on the total mineral content at 4 mol MgO/l suspension (corresponds to 161.23 g MgO/ or 161.72 g minerals /l). Burnt dolomite with an MgO content of 38.7 wt.-% was dosed from a suspension at 2 mol MgO/l suspension (corresponds to 80.6 g MgO/l or 208.3 g burnt dolomite). The suspensions were mixed well immediately prior dosing to ensure an even distribution of the solids. Suspensions of MgO and burnt dolomite were added. In parallel, control samples of calcium carbonate slurry were prepared in absence of any additives. All samples were incubated to reach an equilibrium for 3 days at 30 °C.

The samples were then inoculated three times with 1 mL of adapted mixture culture consisting of *Comomonas aquatic*, *Pseudomonas stutzeri*, *Thauera mechernichensis, Brevundimonas intermedia, Rhizobium radiobacter, Spingobium yanoikuyae*, *Caldimonas sp.,* and *Hydrogenophaga sp..* After each inoculation, the samples were incubated at 30 °C for 24 hours. Thereafter, a 1:10 dilution of an aliquot was prepared in phosphate buffered saline (PBS; pH= 7.4, 137 mmol/l NaCl, 2.7 mmol/l KCI, 10 mmol/l Na₂HPO₄, 1.8 mmol/l KH₂PO₄) and was plated on TSA plates. These plates were incubated at 30 °C and analysed after 5 days. The first inoculation was performed 3 days, the second inoculation 5 days and the third inoculation 10 days after addition of ingredients.

The results of the inoculations are outlined in Table 1 below.

**Table 1. Three-challenge Preservation test with a complex bacterial mixture as inoculum in slurry with different amounts of MgO, CaO and/or MIT as antimicrobial agent.**

| Additives in ppm per aqueous content | | | | | Counts after Inoculation [cfu /ml] | | | pH |
|---|---|---|---|---|---|---|---|---|
| | MIT | MgO¹ | CaO² | Burnt Dolomite³ | First | Second | Third | |
| 1 | 1 050 | 1389 | 1981 | 3588 | < 100 | < 100 | < 100 | 10.2 |
| 2 | 750 | 1389 | 1981 | 3588 | < 100 | < 100 | < 100 | 10.3 |
| 3 | 450 | 1389 | 1981 | 3588 | < 100 | < 100 | < 100 | 10.4 |
| 4 | 150 | 1389 | 1981 | 3588 | < 100 | < 100 | < 100 | 10.5 |
| 5 | 0 | 1389 | 1981 | 3588 | > 100 000 | > 100 000 | > 100 000 | 10.3 |
| 6 | 1 050 | 3000 | 4279 | 7752 | < 100 | < 100 | < 100 | 10.6 |
| 7 | 750 | 3000 | 4279 | 7752 | < 100 | < 100 | < 100 | 10.6 |
| 8 | 450 | 3000 | 4279 | 7752 | < 100 | < 100 | < 100 | 10.6 |
| 9 | 150 | 3000 | 4279 | 7752 | < 100 | < 100 | < 100 | 10.8 |
| 10 | 0 | 3000 | 4279 | 7752 | > 10 000 | > 100 000 | > 100 000 | 10.7 |
| 11 | 1 050 | 3000 | 0 | 0 | < 100 | < 100 | < 100 | 9.9 |
| 12 | 750 | 3000 | 0 | 0 | < 100 | < 100 | < 100 | 9.9 |
| 13 | 450 | 3000 | 0 | 0 | < 100 | < 100 | < 100 | 10.1 |
| 14 | 150 | 3000 | 0 | 0 | < 100 | 200 | < 100 | 10.0 |
| 15 | 0 | 3000 | 0 | 0 | > 100 000 | > 100 000 | > 100 000 | 10.0 |
| 16 | 1 050 | 0 | 0 | 0 | 4 900 | 2000 | < 100 | 8.5 |
| 17 | 750 | 0 | 0 | 0 | > 10 000 | 4600 | 100 | 8.4 |
| 18 | 450 | 0 | 0 | 0 | > 10 000 | > 10 000 | 1 100 | 8.5 |
| 19 | 150 | 0 | 0 | 0 | > 100 000 | > 100 000 | > 10 000 | 8.7 |
| 20 | 0 | 0 | 0 | 0 | > 100 000 | > 100 000 | > 100 000 | 8.1 |

| | | | | | | | | |
|---|---|---|---|---|---|---|---|---|
| ¹Amount of MgO dosed via the burnt dolomite or the pure MgO. ²Amount of CaO dosed via the burnt dolomite. ³Amount of burnt dolomite added to reach the indicated MgO and CaO concentration. | | | | | | | | |

### Example 4: Three-challenge Preservation test

The indicated amounts of ingredients were introduced into 50 g samples of calcium carbonate slurry (77.1 wt.-% solids content). As antimicrobial agent methylisothiazolinone (MIT, CAS No. 2682-20-4) was dosed as 20 % (w/w) solution. Pure MgO was dosed from a suspension containing water and MgO with a purity of 99.7 wt.-% MgO based on the total mineral content at 4 mol MgO/l suspension (corresponds to 161.24 g MgO/ or 161.73 g minerals /l). In parallel, control samples of calcium carbonate slurry were prepared in absence of any additives. All samples were incubated to reach an equilibrium for 3 days at 30 °C.

All samples were then inoculated three times with 1 mL of adapted mixture culture consisting of *Comomonas aquatic*, *Pseudomonas stutzeri*, *Thauera mechernichensis, Brevundimonas intermedia, Rhizobium radiobacter, Spingobium yanoikuyae*, *Caldimonas sp.,* and *Hydrogenophaga sp..* After each inoculation, the samples were incubated at 30 °C for 24 hours. Thereafter, a 1:10 dilution of an aliquot was prepared in phosphate buffered saline (PBS) and was plated on TSA plates. These plates were incubated at 30 °C and analysed after 5 days. The first inoculation was performed 3 days, the second inoculation 5 days and the third inoculation 10 days after addition of ingredients.

The results of the inoculations are outlined in Table 2 below.

**Table 2. Three-challenge Preservation test with a complex bacterial mixture as inoculum in slurry with different amounts of MgO and/or MIT as antimicrobial agent.**

| Additives in ppm per aqueous content | | | Counts after Inoculation [cfu /ml] | | | pH |
|---|---|---|---|---|---|---|
| | MIT | MgO¹ | First | Second | Third | |
| 1 | 750 | 3000 | < 100 | 100 | < 100 | 10.06 |
| 2 | 375 | 3000 | 200 | < 100 | 400 | 10.11 |
| 3 | 187.5 | 3000 | < 100 | < 100 | < 100 | 10.09 |
| 4 | 0 | 3000 | > 100 000 | > 100 000 | > 100 000 | 10.05 |
| 5 | 750 | 0 | > 10 000 | 5 400 | 5 300 | 8.58 |
| 6 | 375 | 0 | > 100 000 | > 10 000 | > 10 000 | 8.6 |
| 7 | 187.5 | 0 | > 100 000 | > 10 000 | > 10 000 | 8.69 |
| 8 | 0 | 0 | > 100 000 | > 100 000 | > 100 000 | 8.6 |

| | | | | | | |
|---|---|---|---|---|---|---|
| ¹Amount of MgO dosed. | | | | | | |

### Example 5: Three-challenge Preservation test

The indicated amounts of ingredients were introduced into 50 g samples of calcium carbonate slurry (77.6 wt.-% solids content). As antimicrobial agent a commercial available blend consisting of 2.5 wt.-% methylisothiazolinone (MIT, CAS No. 2682-20-4) 2.5 wt.-% benzisothiazolinone (BIT, CAS No. 2634-33-5), 8.5 wt.-% bronopol (BrnP, CAS No. 52-51-7) antimicrobial actives, based on aqueous content of the commercial antimicrobial agent, was dosed. Pure MgO was dosed from a suspension containing water and MgO with a purity of 99.7 wt.-% MgO based on total mineral content at 4 mol MgO/l suspension (corresponds to 161.24 g MgO/ or 161.73 g minerals /l).

Burnt dolomite was dosed as ground powder at 625 ppm based on the aqueous content of the slurry. Half burnt dolomite was dosed as ground powder at 1 250 ppm based on aqueous content of the slurry.

In parallel, control samples of calcium carbonate slurry were prepared in absence of any additives. All samples were incubated to reach an equilibrium for 3 days at 30 °C.

All samples were then inoculated three times with 1 mL of adapted mixture culture consisting of *Comomonas aquatic*, *Pseudomonas stutzeri*, *Thauera mechernichensis, Brevundimonas intermedia, Rhizobium radiobacter, Spingobium yanoikuyae*, *Caldimonas sp.,* and *Hydrogenophaga sp..* After each inoculation, the samples were incubated at 30 °C for 24 hours. Thereafter, a 1:10 dilution of an aliquot was prepared in phosphate buffered saline (PBS) and was plated on TSA plates. These plates were incubated at 30 °C and analysed after 5 days. The first inoculation was performed 3 days, the second inoculation 5 days and the third inoculation 10 days after addition of ingredients.

The results of the inoculations are outlined in Table 3 below.

**Table 3. Three-challenge Preservation test with a complex bacterial mixture as inoculum in slurry with different amounts of MgO, CaO and/or Biocide (BIT, MIT, Bronopol mixture) as antimicrobial agent.**

| Additives in ppm per aqueous content | | | | | | Counts after Inoculation [cfu /ml] | | |
|---|---|---|---|---|---|---|---|---|
| Biocide² | | Dosage Dolomite | Dolomite | MgO¹ | Ca O¹ | First | Second | Third |
| 1 | 0 | 0 | None | 0 | 0 | > 100 000 | > 100 000 | > 100 000 |
| 3 | 300 | 0 | None | 0 | 0 | > 100 000 | > 100 000 | > 100 000 |
| 4 | 900 | 0 | None | 0 | 0 | < 100 | 200 | 500 |
| 5 | 0 | 625 | Burnt | 242 | 345 | > 100 000 | > 100 000 | > 100 000 |
| 7 | 300 | 625 | Burnt | 242 | 345 | 5600 | 1 000 | > 10 000 |
| 8 | 900 | 625 | Burnt | 242 | 345 | < 100 | < 100 | < 100 |
| 9 | 0 | 1250 | Half burnt | 363 | 0 | > 100 000 | > 100 000 | > 100 000 |
| 1 | | 1250 | Half burnt | 363 | | | | |
| 1 | 300 | | | | 0 | 10 000 | > 10 000 | > 100 000 |
| 1 | | 1250 | Half burnt | 363 | | | | |
| 2 | 900 | | | | 0 | < 100 | < 100 | < 100 |

| | | | | | | | | |
|---|---|---|---|---|---|---|---|---|
| ¹Amount of MgO and CaO dosed via the dolomite indicated. ²Biocide consisted of 2.5 wt.-% MIT, 2.5 wt.-% BIT and 8.5 wt.-% bronopol | | | | | | | | |

### Example 6: Single-challenge Preservation test

The indicated amounts of ingredients were introduced into 3 ml samples of calcium carbonate slurry (77.8 wt.-% solids content). As antimicrobial agents, 2-phenylphenol (OPP, CAS No. 90-43-7) was dosed as 45 % (w/w) solution, bronopol (BrnP, CAS NO. 52-51-7) was dosed as a 30 % (w/w) solution and sodium pyrithione (NaPy, CAS NO., 3811-73-2) was dosed as a 40 % (w/w) solution. Pure MgO was dosed as a suspension containing water and MgO with a purity of 99.7 wt.-% MgO based on the total mineral content at 2 mol MgO/l suspension (corresponds to 80.6 g MgO/ or 80.84 g minerals /l). In parallel, control samples of calcium carbonate slurry were prepared in absence of any additives. All samples were incubated to reach an equilibrium for at least 2 h at room temperature.

All samples were then inoculated once with 0.02 mL of an overnight culture of the indicated bacteria. All samples were incubated at 30 °C for 24 h. After incubation colony forming units (cfu) per plate (cfu/plate) were determined as described above. As Minimal inhibitory concentration (MIC) of a given MgO concentration for a bacterial strain, the lowest concentration of biocide where the bacterial concentration dropped below 100 cfu/plate, was defined.

The results of the inoculations are outlined in Tables 4, 5, 6 and 7 below.

**Table 4. cfu/plate of a Single-challenge Preservation test after inoculation with E.coli as inoculum in slurry with different amounts of MgO and/or sodium pyrithione (NaPyr) as antimicrobial agent.**

| | Inoculum | NaPyr¹ ppm | MgO² ppm | Counts cfu / plate |
|---|---|---|---|---|
| 1 | *E. coli* | 300 | 0 | > 1 000 |
| 2 | *E. coli* | 150 | 3000 | 3 |
| 3 | *E. coli* | 150 | 1 500 | 78 |
| 4 | *E. coli* | 150 | 750 | > 100 |
| 5 | *E. coli* | 150 | 0 | > 1 000 |
| 6 | *E. coli* | 30 | 3000 | > 100 |
| 7 | *E. coli* | 30 | 1 500 | > 100 |
| 8 | *E. coli* | 30 | 750 | > 1 000 |
| 9 | *E. coli* | 30 | 0 | > 1 000 |
| 10 | *E. coli* | 0 | 3000 | > 1 000 |
| 11 | *E. coli* | 0 | 1 500 | > 1 000 |
| 12 | *E. coli* | 0 | 750 | > 1 000 |
| 13 | *E. coli* | 0 | 0 | > 1 000 |

| | | | | |
|---|---|---|---|---|
| ¹Amount of sodium pyrithione dosed in ppm. ²Amount of MgO dosed in ppm. | | | | |

**Table 5. cfu/plate of a Single-challenge Preservation test after inoculation with E.coli as inoculum in slurry with different amounts of MgO and/or orthophenylphenol (OPP) as antimicrobial agent.**

| | Inoculum | OPP¹ ppm | MgO² ppm | Counts cfu / plate |
|---|---|---|---|---|
| 1 | *E. coli* | 150 | 3000 | 2 |
| 2 | *E. coli* | 150 | 1 500 | > 100 |
| 3 | *E. coli* | 150 | 750 | > 100 |
| 4 | *E. coli* | 150 | 0 | > 1 000 |
| 5 | *E. coli* | 0 | 3000 | > 1 000 |
| 6 | *E. coli* | 0 | 1 500 | > 1 000 |
| 7 | *E. coli* | 0 | 750 | > 1 000 |
| 8 | *E. coli* | 0 | 0 | > 1 000 |

| | | | | |
|---|---|---|---|---|
| ¹Amount of orthophenylphenol dosed in ppm. ²Amount of MgO dosed in ppm | | | | |

**Table 6. cfu/plate of a Single-challenge Preservation test after inoculation with S.aureus as inoculum in slurry with different amounts of MgO and/or sodium pyrithione (NaPyr) as antimicrobial agent.**

| | Inoculum | NaPyr¹ ppm | MgO² ppm | Counts cfu / plate |
|---|---|---|---|---|
| 1 | *S. aureus* | 300 | 0 | >1 000 |
| 2 | *S. aureus* | 300 | 750 | 24 |
| 3 | *S. aureus* | 300 | 1 500 | 0 |
| 4 | *S. aureus* | 300 | 3000 | 0 |
| 5 | *S. aureus* | 300 | 6000 | 0 |
| 6 | *S. aureus* | 300 | 9000 | 0 |
| 7 | *S. aureus* | 0 | 0 | >1 000 |
| 8 | *S. auerus* | 0 | 750 | >1 000 |
| 9 | *S. aureus* | 0 | 1 500 | >1 000 |
| 10 | *S. aureus* | 0 | 3000 | >1 000 |
| 11 | *S. aureus* | 0 | 6000 | >1 000 |
| 12 | *S. aureus* | 0 | 9 000 | >1 000 |

| | | | | |
|---|---|---|---|---|
| ¹Amount of sodium pyrithione dosed in ppm. ²Amount of MgO dosed in ppm. | | | | |

**Table 7. cfu/plate of a Single-challenge Preservation test after inoculation with S. aureus as inoculum in slurry with different amounts of MgO and/or bronopol (BrnP) as antimicrobial agent.**

| | Inoculum | BrnP¹ ppm | MgO² ppm | Counts cfu / plate |
|---|---|---|---|---|
| 1 | *S. aureus* | 90 | 0 | > 1 000 |
| 2 | *S. aureus* | 90 | 750 | > 100 |
| 3 | *S. aureus* | 90 | 1 500 | > 100 |
| 4 | *S. aureus* | 90 | 3000 | 6 |
| 5 | *S. aureus* | 90 | 6000 | 14 |
| 6 | *S. aureus* | 90 | 9000 | 1 |
| 7 | *S. aureus* | 30 | 0 | > 1 000 |
| 8 | *S. aureus* | 30 | 750 | > 1 000 |
| 9 | *S. aureus* | 30 | 1 500 | > 100 |
| 10 | *S. aureus* | 30 | 3000 | > 100 |
| 11 | *S. aureus* | 30 | 6000 | > 100 |
| 12 | *S. aureus* | 30 | 9000 | 66 |
| 14 | *S. aureus* | 15 | 0 | > 1 000 |
| 15 | *S. aureus* | 15 | 750 | > 1 000 |
| 16 | *S. aureus* | 15 | 1 500 | > 100 |
| 17 | *S. aureus* | 15 | 3000 | 20 |
| 18 | *S. aureus* | 15 | 6000 | > 100 |
| 19 | *S. aureus* | 15 | 9000 | > 100 |
| 20 | *S. aureus* | 0 | 0 | > 1 000 |
| 21 | *S. aureus* | 0 | 750 | > 1 000 |
| 22 | *S. aureus* | 0 | 1 500 | > 1 000 |
| 23 | *S. aureus* | 0 | 3000 | > 1 000 |
| 24 | *S. aureus* | 0 | 6000 | > 1 000 |
| 25 | *S. aureus* | 0 | 9 000 | > 1 000 |

| | | | | |
|---|---|---|---|---|
| ¹Amount of Bronopol dosed in ppm. ²Amount of MgO dosed in ppm. | | | | |

### Example 7: Other magnesium sources

The indicated amounts of ingredients were introduced into 3 ml samples of calcium carbonate slurry (77.8 wt.-% solids content). As antimicrobial agent sodium pyrithione (NaPy, CAS NO., 3811-73-2) was dosed as a 40 % (w/w) solution. Salts (MgO, MgCl₂ or MgSO₄) with a purity of > 99 %, were dosed from a suspension or solution. In parallel, control samples of calcium carbonate slurry were prepared in absence of any additives. All samples were incubated to reach an equilibrium for at least 2 h at room temperature.

All samples were then inoculated once with 0.02 ml of overnight culture of the indicated bacteria. All samples were incubated at 30 °C for 24 h. After incubation colony forming units (cfu) per plate (cfu/plate) were determined as described above.

The results of the inoculations are outlined in Table 8 below.

**Table 8. cfu/plate of a Single-challenge Preservation test after inoculation with E.coli as inoculum in slurry with different amounts of magnesium salts (MgO, MgCl₂ or MgSO₄) and sodium pyrithione (NaPyr) as antimicrobial agent.**

| | Inoculum | NaPyr¹ ppm | MgX² mmol/l | MgO² ppm | MgCl₂² ppm | MgSO₄² ppm | Counts cfu / plate |
|---|---|---|---|---|---|---|---|
| 1 | *E. coli* | 150 | 0 | 0 | 0 | 0 | > 1 000 |
| 2 | *E. coli* | 150 | 18.6 | 750 | | | > 100 |
| 3 | *E. coli* | 150 | 18.6 | | 1261 | | > 1 000 |
| 4 | *E. coli* | 150 | 18.6 | | | 746 | > 1 000 |
| 5 | *E. coli* | 150 | 37.2 | 1 500 | | | 78 |
| 6 | *E. coli* | 150 | 37.2 | | 2522 | | > 1 000 |
| 7 | *E. coli* | 0 | 0 | 0 | 0 | 0 | > 1 000 |
| 8 | *E. coli* | 0 | 18.6 | 750 | | | > 1 000 |
| 9 | *E. coli* | 0 | 18.6 | | 1261 | | > 1 000 |
| 10 | *E. coli* | 0 | 18.6 | | | 746 | > 1 000 |
| 11 | *E. coli* | 0 | 37.2 | 1 500 | | | > 1 000 |
| 12 | *E. coli* | 0 | 37.2 | | 2522 | | > 1 000 |

| | | | | | | | |
|---|---|---|---|---|---|---|---|
| ¹Amount of sodium pyrithione dosed. ²Amount of Magnesium salt dosed (MgO, MgSO₄ or MgCl₂) dosed. | | | | | | | |

### Example 8: Curative test with three post-treatment challenges

A natural contaminated industrial sample of calcium carbonate slurry (64.48 wt.-% solids content) was received to perform a curative treatment with preservation (i.e. removal of bacterial contamination and preservation from recontamination). This slurry had a particle size distribution of *d*₅₀ = 1.6 µm and 65 wt.-% of all particles have a particle size of < 2 µm. The indicated amounts of ingredients were introduced into 50 g samples of calcium carbonate slurry. As antimicrobial agent a commercial available blend consisting of 2.5 wt.-% methylisothiazolinone (MIT, CAS No. 2682-20-4) 2.5 wt.-% benzisothiazolinone (BIT, CAS No. 2634-33-5), 8.5 wt.-% bronopol (BrnP, CAS No. 52-51-7) antimicrobial actives was dosed.

Pure MgO was dosed from a suspension containing water and MgO with a purity of 99.7 wt.-% MgO based on the total mineral content at 4 mol MgO/l suspension (corresponds to 161.24 g MgO/l or 161.73 g minerals/l).

Half burnt dolomite was dosed as from a suspension containing water and 29 wt.-% MgO based on the total mineral content at 2 mol MgO/l suspension (corresponds to 80.62 g MgO/l or 278 g minerals /l).

In parallel, control samples of calcium carbonate slurry were prepared in absence of any additives. All samples were incubated for 24 h at 30°C. Thereafter, a 1:10 dilution of an aliquot was prepared in phosphate buffered saline (PBS) and was plated on TSA plates to enumerate the cfu/ml after curative treatment. These plates were incubated at 30 °C and analysed after 3 days.

All samples were then inoculated three times with 1 ml of untreated contaminated slurry to determine the preservation efficiency. After each inoculation of these three post-treatment challenges, the samples were incubated at 30°C for 24 h. Thereafter, a 1:10 dilution of an aliquot was prepared in phosphate buffered saline (PBS) and was plated on TSA plates. These plates were incubated at 30°C and analysed after 3 days. The first inoculation was performed 4 days, the second inoculation 7 days and the third inoculation 18 days after addition of ingredients.

Among the bacteria present in the contaminated slurry that produced cfu, the following species were identified: *Staphylococcus capitis, Micrococcus luteus*, *Bacillus halodurans*, *Ochrobactrum sp., Ochrobactrum tritici* and *Kocuria rhizophila*. Species were identified by Bruker Daltonics MALDI Biotyper (Billerica, Massachusetts, USA).

The results of the inoculations are outlined in Table 9 below.

**Table 9. Curative test with three post-treatment challenges of a slurry containing a natural occurring bacterial mixture. The slurry was treated with different amounts of MgO and/or Biocide (BIT, MIT, Bronopol mixture) as antimicrobial agent.**

| | Additives in ppm per aqueous content | | | Counts after Inoculation cfu /ml | | | |
|---|---|---|---|---|---|---|---|
| | Biocide² | MgO¹ | Mineral | Curative | First | Second | Third |
| 1 | 0 | 0 | None | > 100 000 | > 100 000 | > 100 000 | > 100 000 |
| 2 | 0 | 1 500 | MgO | > 100 000 | > 100 000 | > 100 000 | > 100 000 |
| 3 | 0 | 3000 | MgO | > 100 000 | > 100 000 | > 100 000 | > 100 000 |
| 4 | 0 | 1 500 | Half burnt | > 100 000 | > 100 000 | > 100 000 | > 100 000 |
| 5 | 0 | 3000 | Half burnt | > 10 000 | > 100 000 | > 100 000 | 9000 |
| 6 | 50 | 0 | None | > 10 000 | 1200 | 3 800 | 7 800 |
| 7 | 50 | 1 500 | MgO | < 100 | < 100 | 300 | 600 |
| 8 | 50 | 3000 | MgO | < 100 | < 100 | 6000 | < 100 |
| 9 | 50 | 1 500 | Half burnt | < 100 | < 100 | < 100 | < 100 |
| 10 | 50 | 3000 | Half burnt | < 100 | 100 | 600 | < 100 |
| 11 | 100 | 0 | None | > 10 000 | < 100 | 2900 | 3 400 |
| 12 | 100 | 1 500 | MgO | < 100 | < 100 | < 100 | < 100 |
| 13 | 100 | 3000 | MgO | < 100 | < 100 | < 100 | < 100 |
| 14 | 100 | 1 500 | Half burnt | < 100 | 100 | < 100 | < 100 |
| 15 | 100 | 3000 | Half burnt | < 100 | < 100 | 300 | < 100 |
| 16 | 200 | 0 | None | 6600 | 100 | 1600 | 3 400 |
| 17 | 200 | 1 500 | MgO | < 100 | < 100 | < 100 | < 100 |
| 18 | 200 | 3000 | MgO | < 100 | < 100 | < 100 | < 100 |
| 19 | 200 | 1 500 | Half burnt | < 100 | 100 | 100 | < 100 |
| 20 | 200 | 3 000 | Half burnt | < 100 | < 100 | < 100 | < 100 |

| | | | | | | | |
|---|---|---|---|---|---|---|---|
| ¹Amount of MgO dosed via the mineral indicated. ²Biocide consisted of 2.5 wt.-% MIT, 2.5 wt.-% BIT and 8.5 wt.-% bronopol | | | | | | | |

### Example 9: Three-challenge Preservation test with Slurry samples prepared combining all minerals prior grinding.

Slurry samples without additive (75 wt.-% solids content) were used as control. As pH-control, slurries without additives were adjusted to pH of 10.0 +/-0.1 using 2 mol/l NaOH in water.

Slurry samples (75.4 wt.-% solids content) containing MgO were prepared by adding the MgO with 97.7 wt.-% MgO content at 1 000 ppm based on total mineral content (dry weight) prior grinding. After grinding the pH was 10.52. The pH was adjusted by adding slurry without additive to a pH of 10.0 +/-0.1.

Slurry samples (75.6 wt.-% solids content) containing half burnt dolomite were prepared by adding 3 000 ppm half burnt dolomite based on total mineral content (dry weight) to the carbonates prior grinding. The half burnt dolomite contained 29 wt.-% MgO. After grinding the pH was 10.8. The pH was adjusted by adding slurry without additive to a pH of 10.0 +/-0.1.

After pH adjustments, antimicrobial agent was added to 50 g samples of the slurry samples indicated. As antimicrobial agent methylisothiazolinone (MIT, CAS No. 2682-20-4) was dosed as 20% (w/w) solution. As another antimicrobial agent a commercial available blend consisting of 2.5 wt.-% methylisothiazolinone (MIT, CAS No. 2682-20-4) 2.5 wt.-% benzisothiazolinone (BIT, CAS No. 2634-33-5), 8.5 wt.-% bronopol (BrnP, CAS No. 52-51-7) antimicrobial actives was dosed.

In parallel, control samples of calcium carbonate slurry were prepared in absence of any antimicrobial agents. All samples were incubated to reach an equilibrium for 3 days at 30 °C.

All samples were then inoculated three times with 1 mL of adapted mixture culture consisting of *Comomonas aquatic*, *Pseudomonas stutzeri*, *Thauera mechernichensis, Brevundimonas intermedia, Rhizobium radiobacter, Spingobium yanoikuyae*, *Caldimonas* sp., and *Hydrogenophaga* sp.. After each inoculation, the samples were incubated at 30 °C for 24 hours. Thereafter, a 1:10 dilution of an aliquot was prepared in phosphate buffered saline (PBS) and was plated on TSA plates. These plates were incubated at 30 °C and analysed after 2 days. The first inoculation was performed 3 days, the second inoculation 5 days and the third inoculation 10 days after addition of ingredients.

The results of the inoculations are outlined in Table 10 below.

**Table 10. Three-challenge Preservation test with a complex bacterial mixture as inoculum in slurries with pH adjusted to 10+/-0.1 using MgO, half burnt dolomite or NaOH and/or Biocide (BIT, MIT, Bronopol mixture) as antimicrobial agent.**

| Additives in ppm per aqueous content | | | | Counts after Inoculation cfu /ml | | |
|---|---|---|---|---|---|---|
| | Additive¹ | pH² | Biocide³ | First | Second | Third |
| 1 | None | 9.15 | 0 | > 100 000 | > 100 000 | > 100 000 |
| 2 | None | | 860 | < 100 | 9 700 | > 10 000 |
| 3 | Half burnt | 10.1 | 0 | > 100 000 | > 100 000 | > 100 000 |
| 4 | Half burnt | | 860 | < 100 | 3200 | < 100 |
| 5 | MgO | 9.96 | 0 | > 100 000 | > 100 000 | > 100 000 |
| 6 | MgO | | 860 | < 100 | 1 300 | < 100 |
| 7 | NaOH | 10.02 | 0 | > 100 000 | > 100 000 | > 100 000 |
| 8 | NaOH | | 860 | 700 | 2400 | > 10 000 |

| | | | | | | |
|---|---|---|---|---|---|---|
| ¹Additive used to adjust pH to 10 +/- 0.1 ²pH prior addition of MIT. ³Biocide consisted of 2.5 wt.-% MIT, 2.5 wt.-% BIT and 8.5 wt.-% bronopol | | | | | | |

### Example 10: Single-challenge Preservation test in buffered aqueous system

Phosphate buffered saline (PBS, pH 7.4) without minerals was used as control without pH adjustment. Samples of PBS were adjusted to pH 10.1 +/- 0.1 using either 2 mol/l NaOH in water or pure MgO or burnt dolomite. MgO had a purity of 99.7 wt.-% based on total mineral content and was dosed as 4 mol MgO/l suspension (corresponds to 161.24 g MgO/l or 161.73 g minerals /l). Burnt dolomite with an MgO content of 38.7 wt.-% was dosed from a suspension at 2 mol MgO/l suspension (corresponds to 80.6 g MgO/l or 208.3 g burnt dolomite /l).

After pH adjustments, antimicrobial agent was added to 10 ml samples of the PBS samples indicated. As antimicrobial agent methylisothiazolinone (MIT, CAS No. 2682-20-4) was dosed as 20 % (w/w) solution. As another antimicrobial agent a commercial available blend consisting of 2.5 wt.-% methylisothiazolinone (MIT, CAS No. 2682-20-4) 2.5 wt.-% benzisothiazolinone (BIT, CAS No. 2634-33-5), 8.5 wt.-% bronopol (BrnP, CAS No. 52-51-7) antimicrobial actives was dosed.

For the preparation of the inoculum, overnight cultures of the bacteria *Comomonas aquatic*, *Pseudomonas stutzeri*, *Thauera mechernichensis, Brevundimonas intermedia, Rhizobium radiobacter, Spingobium yanoikuyae*, *Caldimonas sp.,* and *Hydrogenophaga sp.* were prepared and combined in equal ratio (i.e. 0.1 ml of each overnight culture. The mixture was further diluted 1:100 in TSB. Of the dilution 0.01 ml was used to inoculate 0.9 ml of the PBS sample. The inoculated samples were incubated for 24 h at 30°C. After incubation, 0.1 ml was directly plated onto TSA plates and the plates were further incubated at 30°C for 3 days prior enumeration of the cfu/ml. Counts from 10 000 cfu/ml to 99 999 cfu/ml are reported as > 10 000 cfu/ml and counts from 1 000 cfu/ml to 9 999 cfu/ml are reported as > 1 000 cfu/ml

The results of the inoculations are outlined in Tables 11 and 12 below.

**Table 11. Single-challenge Preservation test with a complex bacterial mixture as inoculum in PBS pH adjusted to 10+/-0.1 using MgO or NaOH and/or MIT as antimicrobial agent.**

| Additives in ppm per aqueous content | | | | Counts after Inoculation |
|---|---|---|---|---|
| | Additive¹ | pH² | MIT | [cfu /ml] |
| 1 | None | 7.4 | 0 | > 10 000 |
| 2 | None | | 10 | > 10 000 |
| 3 | None | | 20 | > 10 000 |
| 4 | None | | 40 | > 1 000 |
| 5 | Burnt Dolomite | 10.1 | 0 | > 1 000 |
| 6 | Burnt Dolomite | | 10 | 240 |
| 7 | Burnt Dolomite | | 20 | 80 |
| 8 | Burnt Dolomite | | 40 | 30 |
| 9 | MgO | 10.2 | 0 | > 1 000 |
| 10 | MgO | | 10 | 20 |
| 11 | MgO | | 20 | 40 |
| 12 | MgO | | 40 | < 10 |
| 13 | NaOH | 10.1 | 0 | > 10 000 |
| 14 | NaOH | | 10 | > 10 000 |
| 15 | NaOH | | 20 | > 10 000 |
| 16 | NaOH | | 40 | 980 |

| | | | | |
|---|---|---|---|---|
| ¹Additive used to adjust pH of PBS to 10 +/- 0.1 ²pH prior addition of MIT. | | | | |

**Table 12. Single-challenge Preservation test with a complex bacterial mixture as inoculum in PBS pH adjusted to 10+/-0.1 using MgO or NaOH and/or Biocide (BIT, MIT, Bronopol mixture) as antimicrobial agent.**

| Additives in ppm per aqueous content | | | | Counts after Inoculation |
|---|---|---|---|---|
| | Additive¹ | pH² | Biocide³ | [cfu /ml] |
| 1 | None | 7.4 | 0 | > 10 000 |
| 2 | None | | 25 | >10 000 |
| 3 | None | | 50 | > 10 000 |
| 4 | None | | 100 | >1 000 |
| 5 | Burnt Dolomite | 10.1 | 0 | >1 000 |
| 6 | Burnt Dolomite | | 25 | 260 |
| 7 | Burnt Dolomite | | 50 | 140 |
| 8 | Burnt Dolomite | | 100 | 70 |
| 9 | MgO | 10.2 | 0 | > 1 000 |
| 10 | MgO | | 25 | 220 |
| 11 | MgO | | 50 | 80 |
| 12 | MgO | | 100 | 30 |
| 13 | NaOH | 10.1 | 0 | > 10 000 |
| 14 | NaOH | | 25 | > 10 000 |
| 15 | NaOH | | 50 | > 1 000 |
| 16 | NaOH | | 100 | > 1 000 |

| | | | | |
|---|---|---|---|---|
| ¹Additive used to adjust pH of PBS to 10 +/- 0.1 ²pH prior addition of MIT. ³Biocide consisted of 2.5 wt.-% MIT, 2.5 wt.-% BIT and 8.5 wt.-% bronopol | | | | |

## Claims

1. Process for stabilising an aqueous preparation against microbial growth, the process comprising the steps of:
a) providing an aqueous preparation, optionally comprising at least one strain of bacteria and/or at least one strain of yeast and/or at least one strain of mould,
b) providing at least one antimicrobial agent,
c) providing a source of at least one metal oxide and/or its hydrated form,
d) contacting the aqueous preparation of step a) with the at least one antimicrobial agent of step b),
e) contacting the aqueous preparation of step a) before and/or during and/or after step d) with the source of at least one metal oxide and/or its hydrated form such that the total amount of the at least one metal oxide and/or its hydrated form in the aqueous preparation is at least 100 ppm, calculated relative to the weight of water in the preparation.

2. The process according to claim 1, wherein the aqueous preparation of step a) comprises
(i) at least one inorganic particulate material, preferably the at least one inorganic particulate material is selected from the group comprising natural ground calcium carbonate, natural and/or synthetic precipitated calcium carbonate, surface-modified calcium carbonate, dolomite, kaolin, talcum, aluminium hydroxide, aluminium silicate, titanium dioxide, barium sulphate, hydroxyapatite and mixtures thereof, and most preferably the at least one inorganic particulate material comprises natural ground calcium carbonate and/or synthetic precipitated calcium carbonate, and/or
(ii) at least one organic material, preferably the at least one organic material is selected from the group comprising carbohydrates such as starch, sugar, cellulose and cellulose based pulp, glycerol, hydrocarbons and mixtures thereof.

3. The process according to claim 1 or 2, wherein the aqueous preparation of
(i) step a) and/or of step d) has a pH value of from 2 to 12, preferably from 6 to 11.5 and more preferably from 7 to 10.5, and/or
(ii) step e) has a pH value of above 8, and preferably of above 9, and/or
(iii) step a) and/or of step d) and/or of step e) has a solids content of up to 85.0 wt.-%, preferably from 10.0 to 82.0 wt.-%, and more preferably from 20.0 to 80.0 wt.-%, based on the total weight of the aqueous preparation.

4. The process according to any one of claims 1 to 3, wherein the at least one strain of bacteria is selected from the group consisting of gram-negative bacteria, gram-positive bacteria and mixtures thereof.

5. The process according to any one of claims 1 to 4, wherein
(i) the at least one strain of bacteria is selected from the group comprising *Methylobacterium sp., Salmonella sp., Escherichia sp.* such as *Escherichia coli, Shigella sp., Enterobacter sp., Pseudomonas sp.* such as *Pseudomonas mendocina, Pseudomonas stutzeri*, *Pseudomonas aeruginosa*, and/or *Pseudomonas putida*, *Burkholderia sp.* such as *Burkholderia cepacia, Bdellovibrio sp., Agrobacterium sp., Alcaligenes sp.* such as *Alcaligenes faecalis, Flavobacterium sp., Ochrobactrum sp. such as Ochrobactrum tritici, Kocuria sp.* such as *Kocuria rhizophila*, *Rhizobium sp.* such as *Rhizobium radiobacter, Sphingobacterium sp., Aeromonas sp., Chromobacterium sp., Vibrio sp., Hyphomicrobium sp., Leptothrix sp., Micrococcus sp., Staphylococcus sp.* such as *Staphylococcus aureus*, *Agromyces sp., Acidovorax sp., Commomonas sp.* such as *Comomonas aquatic, Brevundimonas sp., Spingobium sp.* such as *Spingobium yanoikuyae, Thauera sp.* such as *Thauera mechernichensis, Caldimonas sp., Hdrogenophaga sp., Teipidomonas sp.,* and mixtures thereof, and mixtures thereof, and/or
(ii) the at least one strain of yeast is selected from the group comprising *Saccharomycotina, Taphrinomycotina, Schizosaccharomycetes, Basidiomycota, Agaricomycotina, Tremellomycetes, Pucciniomycotina, Microbotryomycetes, Candida sp.* such as *Candida albicans, Candida tropicalis, Candida stellatoidea, Candida glabrata, Candida krusei, Candida guilliermondii, Candida viswanathii, Candida lusitaniae* and mixtures thereof, *Yarrowia sp.* such as *Yarrowia lipolytica, Cryptococcus* sp. such as *Cryptococcus gattii* and *Cryptococcus neofarmans, Zygosaccharomyces sp., Rhodotorula sp.* such as *Rhodotorula mucilaginosa, Saccharomyces sp.* such as *Saccharomyces cerevisiae, Pichia sp.* such as *Pichia membranifaciens* and mixtures thereof, and/or
(iv) the at least one strain of mould is selected from the group comprising of *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

6. The process according to any one of claims 1 to 5, wherein the at least one antimicrobial agent of step b) is effective against the at least one strain of bacteria and/or at least one strain of yeast and/or at least one strain of mould when present in the aqueous preparation or the at least one antimicrobial agent of step b) is effective against the at least one strain of bacteria and/or at least one strain of yeast and/or at least one strain of mould when present in the aqueous preparation in the presence of the source of at least one metal oxide and/or its hydrated form.

7. The process according to any one of claims 1 to 6, wherein the at least one antimicrobial agent of step b) is selected from the group comprising phenols, halogenated phenols, halogen-containing compounds, halogen-releasing compounds, isothiazolinones, aldehyde-containing compounds, aldehyde-releasing compounds, guanidines, sulphones, thiocyanates, pyrithiones, antibiotics such as β-lactam antibiotics, quaternary ammonium salts, peroxides, perchlorates, amides, amines, heavy metals, biocidal enzymes, biocidal polypeptides, azoles, carbamates, glyphosates, sulphonamides and mixtures thereof.

8. The process according to any one of claims 1 to 7, wherein the source of at least one metal oxide and/or its hydrated form comprises an oxide and/or a hydrated form of an element of group 2 of the periodic table.

9. The process according to any one of claims 1 to 8, wherein the source of at least one metal oxide and/or its hydrated form is selected from the group comprising magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide.

10. The process according to any one of claims 1 to 9, wherein step e) is carried out in that the source of at least one metal oxide and/or its hydrated form is added to the aqueous preparation in an amount such that the total amount of the at least one metal oxide and/or its hydrated form in the aqueous preparation is from 100 to 5 000 ppm, calculated relative to the weight of water in the preparation.

11. The process according to any one of claims 1 to 10, wherein step e) is carried out before step d).

12. The process according to any one of claims 1 to 11, wherein step d) and/or step e) is/are repeated one or more times.

13. The process according to any one of claims 1 to 12, wherein step d) is carried out in that the at least one antimicrobial agent is added to the aqueous preparation
(i) in an amount being at least 10 %, preferably at least 25 %, more preferably at least 50 % and most preferably at least 75 %, below the minimum inhibitory concentration (MIC) of the at least one antimicrobial agent determined in the absence of the metal oxide and/or its hydrated form for the at least one strain of bacteria and/or at least one strain of yeast and/or at least one strain of mould, and/or
(ii) in an amount such that the total amount of the at least one antimicrobial agent in the aqueous preparation is from 0.5 ppm to 6 000 ppm, calculated relative to the weight of water in the aqueous preparation.

14. An aqueous preparation stabilised against microbial growth obtainable by a process according to any one of claims 1 to 13.

15. An aqueous preparation stabilised against microbial growth comprising
a) at least one antimicrobial agent in an amount such that the total amount of the at least one antimicrobial agent in the aqueous preparation is from 0.5 ppm to 6 000 ppm, calculated relative to the weight of water in the aqueous preparation, and
b) a source of at least one metal oxide and/or its hydrated form such that the total amount of the at least one metal oxide and/or its hydrated form in the aqueous preparation is at least 100 ppm, calculated relative to the weight of water in the aqueous preparation.

16. Use of a source of at least one metal oxide and/or its hydrated form, preferably the source of at least one metal oxide and/or its hydrated form is selected from the group comprising magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, more preferably magnesium oxide and/or magnesium hydroxide, for reducing the amount of an antimicrobial agent against at least one strain of bacteria and/or at least one strain of yeast and/or at least one strain of mould in an aqueous preparation as defined in any one of claims 1 to 13, wherein the amount of the antimicrobial agent in the aqueous preparation is at least 10 %, preferably at least 25 %, more preferably at least 50 % and most preferably at least 75 %, below the minimum inhibitory concentration (MIC) of the at least one antimicrobial agent, the MIC being determined in absence of the metal oxide and/or its hydrated form for the at least one strain of bacteria and/or at least one strain of yeast and/or at least one strain of mould.

17. Use of a composition as an antimicrobial composition in an aqueous preparation optionally comprising at least one strain of bacteria and/or at least one strain of yeast and/or at least one strain of mould, the composition comprising
a) at least one antimicrobial agent in an amount such that the total amount of the at least one antimicrobial agent in the aqueous preparation is from 0.5 ppm to 6 000 ppm, calculated relative to the weight of water in the aqueous preparation, and
b) a source of at least one metal oxide and/or its hydrated form such that the total amount of the at least one metal oxide and/or its hydrated form in the aqueous preparation is at least 100 ppm, calculated relative to the weight of water in the aqueous preparation.

18. Use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof, preferably magnesium oxide and/or magnesium hydroxide, for increasing the pH of an aqueous preparation as defined in any one of claims 1 to 13 to a pH of above 8, preferably of above 9, e.g. above 9.2, more preferably above 9.4, even more preferably above 9.6, still more preferably above 9.8, and most preferably of above 10, e.g. from 10 to 10.5.

19. Use of an aqueous preparation stabilised against microbial growth according to claim 14 or 15 in paper, plastics, polymer compositions, paint, coatings, concrete and/or agriculture applications.
